# EUROPÄISCHE PATENTSCHRIFT

(11) **EP 3 867 798 B1**
(45) Veröffentlichungstag und Bekanntmachung des Hinweises auf die Patenterteilung: **18.11.2026**
(21) Anmeldenummer: 19782504.5
(22) Anmeldetag: 25.09.2019
(51) Int. Cl.: G06V 20/69

(54) **INFERENZ MIKROSKOPIE**
INFERENCE MICROSCOPY
MICROSCOPIE FAISANT APPEL À L'INFÉRENCE

(30) Priorität: 18.10.2018 DE 102018217903
(43) Veröffentlichungstag der Anmeldung: 25.08.2021
(73) Patentinhaber: Leica Microsystems CMS GmbH, 35578 Wetzlar (DE)
(72) Erfinder: SIECKMANN, Frank, 75031 Eppingen (DE); KAPPEL, Constantin, 69198 Schriesheim (DE)
(74) Vertreter: Grünecker Patent- und Rechtsanwälte PartG mbB
(86) Internationale Anmeldenummer: PCT/EP2019/075847
(87) Internationale Veröffentlichungsnummer: WO 2020/078678

(56) Entgegenhaltungen:
- DE-A1- 102014 102 080
- LOUIS-\'EMILE ROBITAILLE ET AL: "Learning to Become an Expert: Deep Networks Applied To Super-Resolution Microscopy", ARXIV.ORG, CORNELL UNIVERSITY LIBRARY, 201 OLIN LIBRARY CORNELL UNIVERSITY ITHACA, NY 14853, 28 March 2018 (2018-03-28), XP080860152
- AUDREY DURAND ET AL: "A machine learning approach for online automated optimization of super-resolution optical microscopy", NATURE COMMUNICATIONS, vol. 9, no. 1, 1 December 2018 (2018-12-01), XP055645800, DOI: 10.1038/s41467-018-07668-y
- YAIR RIVENSON ET AL: "Toward a Thinking Microscope: Deep Learning in Optical Microscopy and Image Reconstruction", ARXIV.ORG, CORNELL UNIVERSITY LIBRARY, 201 OLIN LIBRARY CORNELL UNIVERSITY ITHACA, NY 14853, 23 May 2018 (2018-05-23), XP081139811, DOI: 10.1364/OPN.29.7.000034

## Beschreibung

Die Erfindung betrifft ein Verfahren und eine Vorrichtung zur Optimierung von Arbeitsabläufen ein oder mehrerer Mikroskope, Mikroskopsysteme oder eines Verbundes von Mikroskopsystemen mittels trainierter Modelle, die in Messungen von Mikroskopen für Vorhersagen eingesetzt werden können (Inferenz).

Experimente sind ein essentieller Teil der Wissenschaft. Mit teilweise immer umfangreicheren und aufwendigeren Versuchsaufbauten versuchen Wissenschaftler neue Erkenntnisse zu gewinnen. Mit der Digitalisierung steigen die erhobenen Datensätze um mehrere Größenordnungen und eine Auswertung dieser Datensätze ohne Computer ist nur noch schwer vorstellbar. Aber auch die Dauer eines fortlaufenden Experimentes konnte durch die Automatisierung der Durchführung von Experimenten erhöht werden, da die Präsenz eines Menschen während der Durchführung nicht mehr zwingend erforderlich ist. Der Stand der Technik zeigt allerdings einige Nachteile und Probleme bestehender Systeme auf, die im Folgenden betrachtet werden.

Bisherige Mikroskope können zum Beispiel nach einem vorprogrammierten Schema Experimente durchführen. Dadurch werden allerdings entweder zu viele nicht-informative Daten aufgenommen oder es können wichtige biologische Phänomene verpasst werden, da vorprogrammierte Schemata dann, wenn das biologische Phänomen nicht Teil des vorprogrammierten Schemas war, ohne den kompletten Abbruch des Experiments keinen Eingriff in einen Arbeitsablauf erlauben. Dies hat hohe Kosten für Datenspeicherung und Auswertung zur Folge, da eine höhere Anzahl von Experimenten durchgeführt werden muss, um die biologischen Phänomene beobachten zu können.

Außerdem können bisherige Systeme nur einen begrenzten, vorher festgelegten Fundus an Anwendungen unterstützen, insbesondere wenn es um Bildverarbeitung geht. Daher veralten die Systeme und können oft nicht oder nur mit hohem Aufwand im Anwendungsspektrum erweitert werden. Hierdurch können bei herkömmlichen Systemen hohe Kosten für den Neukauf oder Kauf zusätzlicher Erweiterungen von Fremdanbietern anfallen. Mikroskope mit Feedback durch Bildverarbeitung können zwar Bildaufnahmebedingungen in Abhängigkeit von Ergebnissen einer asynchron arbeitenden Bildverarbeitung erfassen. Allerdings bietet dieses Verfahren nur eine niedrige Genauigkeit und lässt sich nur für spezielle Fälle einer untersuchten Probe verwenden. Unbekannte Anwendungen oder Proben erfordern neuen Zeitaufwand, um die Bildverarbeitung für jedes einzelne Problem von Grund auf neu zu entwickeln. Des Weiteren sind bisherige Feedback-Verfahren meist ineffektiv, da ein verlässliches Feedback erst nach einer genügend großen Menge von aufgenommen Bildern möglich ist.

Neuronale Netze werden bisher nur für die Auswertung und/oder Aufbereitung von durch ein Mikroskop aufgenommenen Bildern eingesetzt. Beispielsweise beschreibt US 2010/0183217 den Einsatz eines neuronalen Netzes um durch ein Elektronenmikroskop aufgenommene Bilder, die verrauscht sind oder einen niedrigen Farb- oder Graustufengradienten haben, wiederherzustellen. Ein Nachteil von Verfahren, die auf der Nachbereitung von Bildern basieren um Ergebnisse einer Messung zu optimieren, ist, dass Informationen in den aufgenommenen Originalbildern durch die Nachbereitung verloren gehen können und die Ursache für die Bildfehler nicht behoben wird, denn ein neuronales Netz zur Nachbereitung von Bildern ermöglicht keinen Eingriff in einen Arbeitsablauf während einer Messung.

Problematisch ist es außerdem, wenn Geräteparameter aus der Norm geraten. Zum Beispiel, wenn Fotosensoren übersteuern, eine Beleuchtung ausfällt, eine Temperatur zu hoch ist, oder der Fokus driftet. Üblicherweise ist dann das Experiment ab diesem Punkt unbrauchbar und muss komplett wiederholt werden, was hohe Kosten und einen hohen Zeitaufwand verursacht. Alternativ können bisherige Systeme auch überraschend, beispielsweise aufgrund fehlender Überwachung eines Zustandes des Mikroskops, ausfallen. Dieser für den Anwender unvorhersehbare Ausfall kann Kosten für ruinierte Experimente und Störungen im Betriebsablauf nach sich ziehen.

LOUIS-\'EMILE ROBITAILLE ET AL, "Learning to Become an Expert: Deep Networks Applied To Super-Resolution Microscopy", offenbart tiefe neuronale Netze für die superauflösende Mikroskopie.

AUDREY DURAND ET AL, "A machine learning approach for online automated optimization of super-resolution optical microscopy", NATURE COMMUNICATIONS, vol. 9, no. 1, offenbart einen maschinellen Lernansatz für die automatisierte Online-Optimierung der hochauflösenden optischen Mikroskopie.

YAIR RIVENSON ET AL, "Toward a Thinking Microscope: Deep Learning in Optical Microscopy and Image Reconstruction", offenbart Deep-Learning-Methoden für die optische Mikroskopie und mikroskopische Bildrekonstruktion, die neue Transformationen zwischen verschiedenen Modi und Modalitäten der mikroskopischen Bildgebung ermöglichen, die vollständig auf Bilddaten basieren.

DE 10 2014 102080 A1 offenbart ein Verfahren zur Bildaufnahme und Bildaufnahmesysteme, bei denen mehrere Bildaufnahmeparameter des Bildaufnahmesystems automatisch eingestellt werden.

Aufgabe der vorliegenden Erfindung ist es somit, Arbeitsabläufe, die von einem Mikroskop oder dessen Komponenten ausgeführt werden, zu optimieren.

Die vorliegende Erfindung löst die angesprochenen Probleme und die Aufgabe durch ein Verfahren und eine Vorrichtung zur Optimierung eines Arbeitsablaufes mindestens eines Mikroskops der Mikroskopsystems. Das Verfahren umfasst die Schritte des Ausführens eines Arbeitsablaufes durch ein oder mehrere Komponenten mindestens eines Mikroskops und/oder Mikroskopsystems, wobei der Arbeitsablauf die Schritte des Erfassens von ersten Daten umfasst, des Anwendens eines trainierten Modells auf die erfassten ersten Daten, und des Treffens mindestens einer Entscheidung den Arbeitsablauf betreffend basierend auf dem Anwenden des trainierten Modells.

Die erfindungsgemäße Vorrichtung umfasst ein oder mehrere Prozessoren und ein oder mehrere computerlesbare Speichermedien, wobei auf den ein oder mehreren computerlesbaren Speichermedien computerausführbare Anweisungen gespeichert sind, die, wenn sie von dem einen oder den mehreren Prozessoren ausgeführt werden, bewirken, dass ein oder mehrere Komponenten eines oder mehrerer Mikroskope und/oder Mikroskopsysteme einen Arbeitsablauf ausführen, wobei der Arbeitsablauf ein Erfassen von ersten Daten umfasst, ein oder mehrere trainierte Modelle auf die erfassten ersten Daten angewendet werden, und mindestens eine Entscheidung den Arbeitsablauf betreffend basierend auf dem Anwenden der ein oder mehreren trainierten Modelle getroffen wird.

Das erfindungsgemäße Verfahren und die erfindungsgemäße Vorrichtung haben den Vorteil, dass trainierte Modelle, die auf neuronalen Netzen, z. B. im Sinne von Deep Learning, basieren können, auf erfasste Daten angewendet werden können und mindestens eine Entscheidung einen Arbeitsablauf betreffend basierend auf dem Anwenden der ein oder mehreren trainierten Modelle getroffen wird. Dies ermöglicht eine effiziente Durchführung von Messungen und/oder eine Automatisierung von Arbeitsabläufen eines oder mehrerer Mikroskope. Trainierte Modelle ermöglichen es Entscheidungen einen Arbeitsablauf betreffend in einer effizienten Art und Weise zu treffen, da mittels trainierter Modelle präzise Vorhersagen auf Basis von wenigen Daten möglich sind. Außerdem ermöglichen trainierte Modelle im Vergleich zu Verfahren aus dem Stand der Technik eine höhere Genauigkeit und eine bessere Generalisierbarkeit auf bisher nicht gekannte Anwendungen.

Das erfindungsgemäße Verfahren und die erfindungsgemäße Vorrichtung können jeweils durch spezifische Ausgestaltungen weiter verbessert werden. Einzelne technische Merkmale der nachfolgend beschriebenen Ausgestaltungen der Erfindung können dabei beliebig miteinander kombiniert und/oder weggelassen werden, sofern es nicht auf den mit dem weggelassenen technischen Merkmal erzielten technischen Effekt ankommt.

In einer Ausführungsform können die ein oder mehreren trainierten Modelle zumindest teilweise auf Basis der erfassten ersten Daten bestimmt werden. Beispielsweise kann ein trainiertes Mastermodell auf die erfassten ersten Daten angewendet werden um die ein oder mehreren trainierten Modelle zu bestimmen. Das Anwenden des trainierten Mastermodells kann eine Analyse der erfassten ersten Daten umfassen, wobei das trainierte Mastermodell basierend auf Informationen aus der Analyse der erfassten ersten Daten die ein oder mehreren trainierten Modelle bestimmen kann. Das trainierte Mastermodell kann in einem ersten Schritt die erfassten ersten Daten klassifizieren und aus einer Vielzahl von Modellen ein oder mehrere zu den erfassten Daten oder zu der Klasse von Daten passende trainierte Modelle auswählen und zur Anwendung bringen. Die Vielzahl von Modellen kann eine Vielzahl von trainierten Modellen sein und kann durch ein Einsatzgebiet klassifiziert und/oder hierarchisch organisiert sein. Einzelne trainierte Modelle aus der Vielzahl von trainierten Modellen können auf einzelne Typen von Proben, Experimente, Messungen oder Geräteeinstellungen spezialisiert sein. Das Bestimmen der ein oder mehreren trainierten Modelle ermöglicht eine schnelle Anpassung an spezielle Gegebenheiten während einer Messung noch zu einer Laufzeit der Messung. Außerdem erlaubt das Bestimmen der trainierten Modelle eine große Varianz in den Eingangsdaten, da für eine spezielle Gegebenheit trainierte Modelle bestimmt und angewendet werden und die für die spezielle Gegebenheit trainierten Modelle eine hohe Vorhersagegenauigkeit aufweisen. Der hierarchische Aufbau und die Auswahl von trainierten Modellen ermöglicht die schrittweise Auswahl eines passenden Modells für eine passende Messung.

In einer weiteren Ausgestaltung kann das Verfahren zur Optimierung von Arbeitsabläufen den Schritt des Adaptierens eines oder mehrerer trainierter Modelle umfassen. Der Schritt des Adaptierens kann ein Trainieren eines Teils eines trainierten Modells zumindest teilweise mittels zweiter Daten umfassen. Zusätzlich oder alternativ kann der Schritt des Adaptierens ein Trainieren des trainierten Modells mittels aggregierter Daten, wobei die aggregierten Daten aus einer oder mehreren Quellen stammen, umfassen. Die aggregierten Daten können automatisch, halbautomatisch oder manuell zu einer Cloud, einem Server oder einem Arbeitsplatzrechner hochgeladene Daten umfassen. Die zweiten Daten können mindestens eines der folgenden umfassen: das trainierte Modell oder Teile davon, erfasste Daten, die Eingabedaten für das trainierte Modell umfassen, Annotationen der Eingabedaten, versteckte Repräsentationen von Daten, Bewertungen von Ausgabewerten des trainierten Modells angewendet auf die Eingabedaten, und Nutzereingaben.

In dieser vorteilhaften Ausgestaltung können somit trainierte Modelle mit einem geringen Aufwand für einen Arbeitsablauf modifiziert oder adaptiert werden, um trainierte Modelle zu aktualisieren oder für ein Anwendungsgebiet zu spezifizieren. Dies ermöglicht eine ständige Weiterentwicklung der Modelle und Optimierung von Arbeitsabläufen. Außerdem kann durch ein Nachtrainieren oder Adaptieren der Modelle das Einsatzgebiet der Mikroskope erweitert oder präzisiert werden, ohne dass eine neue Bildverabeitungssoftware gekauft oder von Grund auf neu programmiert werden muss.

In einer Ausgestaltung des erfindungsgemäßen Verfahrens zur Optimierung von Arbeitsabläufen, umfasst das Verfahren den Schritt des Erfassens und/oder des Sendens von zweiten Daten. Das Erfassen der zweiten Daten kann ein Erfassen eines nutzerdefinierten Zustandes, der von einem durch das trainierte Modell definierten Zustand abweicht, umfassen, wobei die zweiten Daten eine Repräsentation der Abweichung von dem durch das trainierte Modell definierten Zustand zu dem nutzerdefinierten Zustand oder eine Repräsentation des nutzerdefinierten Zustandes umfassen. Das trainierte Modell kann mittels dieser Daten adaptiert oder weiter trainiert werden und so auf vom Nutzer gewünschte Einstellungen trainiert werden. Dies erschließt neue Anwendungsfelder und kann den Arbeitsablauf in Bezug auf Nutzerfreundlichkeit des Mikroskops optimieren und auf die Wünsche des Nutzers anpassen. Die erfassten zweiten Daten können in einem Ausführungsbeispiel an eine Cloud, einen Server oder einen Arbeitsplatzrechner gesendet und dort aggregiert werden und für das Training von neuen oder die Verbesserung (Adaptierung) von bestehenden genutzt werden. Das Mikroskop kann so zu einer Datenquelle für die Entwicklung weiterer Modelle, die auf Maschinenlernen, Deep Learning oder ähnlichen Verfahren basieren, werden. Die trainierten Modelle können auf einer Cloud, einem Server oder einem Arbeitsplatzrechner an Daten aus einer oder mehreren Quellen trainiert werden und auf Mikroskope oder Mikroskopsysteme und/oder auf attachierte Komponenten von Mikroskopen oder Mikroskopsystemen geladen werden.

In einer Ausführungsform kann das Verfahren als Web-Service ausgeführt werden, wobei die ein oder mehreren trainierten Modelle in einer Cloud angewendet werden. Alternativ, können die ein oder mehreren trainierten Modelle auf einem Arbeitsplatzrechner, auf dem mindestens einen Mikroskop oder Mikroskopsystem und/oder auf attachierten Komponenten des mindestens einen Mikroskops oder Mikroskopsystems angewendet werden.

In einer Ausgestaltung der erfindungsgemäßen Vorrichtung kann das Anwenden der ein oder mehreren trainierten Modelle eine Analyse der erfassten ersten Daten umfassen. Die Vorrichtung kann ein Teil des Mikroskops (z. B. ein Kleinstrechner) sein, oder ein Embedded-Computer oder ein Systemrechner die sich separat vom Mikroskop befinden und über ein Netzwerk mit dem Mikroskop verbunden sind. Des Weiteren kann die Vorrichtung die Ausführung von trainierten Modellen mit maximaler Geschwindigkeit bzw. in Echtzeit ermöglichen. Die Mikroskope können aus funktional vernetzten Subsystemen oder Modulen, die miteinander in Verbindung stehen, bestehen.

Subsysteme, Komponenten oder Module umfassen alle Systeme welche im Rahmen einer Mikroskopie-Aufgabe zur Lösung der gestellten Aufgabe beitragen. Die Mikroskopie Sub-Systeme können sich dabei am Mikroskop selbst befinden, wie beispielsweise Kameras, Detektoren, Mikroskop-Tische, Motoren, Software-Module, Firmware-Module etc. Sie können sich aber auch räumlich getrennt von einem Mikroskop befinden, wie beispielsweise Datenbanken, Netzwerk-Anbindungen, Analyse-Software, Mikrotome, Pipettierautomaten, Roboter, andere Mikroskope, Cluster von Mikroskopen oder Rechnern etc.

In Ausführungsformen können die ein oder mehreren Prozessoren der erfindungsgemäßen Vorrichtung Rechenbeschleuniger, wie Graphical Processing Units, GPUs, TensorFlow Processing Units, TPUs, auf Machine Learning, ML,- und/oder Deep Learning, DL,-spezialisierte Application Specific Integrated Circuit, ASICs, oder Field Programmable Gated Arrays, FPGAs, oder mindestens eine Central Processing Unit, CPU, umfassen. Man muss hier zwischen Training und Inferenz, was das Anwenden der ein oder mehreren trainierten Modelle umfasst, unterscheiden. Beim Training "lernt" das Modell durch Veränderung seiner Parameter, eine bestimmte Art von Vorhersage zu machen basierend auf versteckten Repräsentationen der Daten, die die "Erfahrung" des Modells darstellen. Für das Training werden viele Daten, große Speicherbandbreite und große Rechenkapazität benötigt. Bei der Inferenz hingegen geht es darum, eine Vorhersage auf einem oder wenigen Datenpunkten möglichst schnell zu machen. Hier kommt man mit weniger Rechenleistung und Speicherbandbreite aus. Somit können die ein oder mehreren trainierten Modelle lokal mit wenig Aufwand angewendet werden, um einen Arbeitsablauf eines Mikroskops zu optimieren.

Modelle können auf Einzelplatzrechnern, Servern oder einer Cloud trainiert werden, da das Training wie beschrieben eine große Speicherbandbreite und Rechenkapazität benötigt. In ein oder mehreren Ausgestaltungen des erfindungsgemäßen Systems können Modelle beständig trainiert oder nachtrainiert werden. Die verbesserten Modelle können dann auf die erfindungsgemäße Vorrichtung geladen werden. Ein Vorteil bei dieser Art des Trainings oder der Feinjustage ist, dass Daten von vielen Quellen (Anwendern, Mikroskopen, oder Mikroskopsystemen) aggregiert und für das Training oder die Feinjustage verwendet werden können. Des Weiteren können Daten von Mikroskopen verwendet werden, die bereits Messungen an unbekannten Proben oder unter neuen Gegebenheiten durchgeführt haben. Somit kann bereits ein geeignetes trainiertes Modell für ein Mikroskop zur Verfügung stehen, obwohl dieses Mikroskop noch keine Messung an der unbekannten Probe oder unter den neuen Gegebenheiten durchgeführt hat.

Die erfassten ersten Daten können mindestens eines der folgenden umfassen: Bilddaten, Nutzereingaben, Fehlermeldungen, Metadaten, Parameterdaten der ein oder mehreren Komponenten, Daten zum Ablauf des Experiments, Informationen zu Reagenzien und Materialien, Informationen zu einem Objekt oder einer Probe, anwenderbezogene Daten, und Gerätedaten von Geräten, die im Verlauf einer durch die ein oder mehreren Mikroskope und/oder Mikroskopsysteme durchgeführten Messung gesteuert werden. Des Weiteren kann ein Mastermodell basierend auf Informationen aus der Analyse der erfassten ersten Daten die ein oder mehreren trainierten Modelle für eine Anwendung auf die erfassten Daten oder neu aufgenommene Daten, vorzugsweise automatisch oder halbautomatisch, bestimmen. Diese ein oder mehreren trainierten Modelle können lokal gespeichert sein. Somit kann die Vorrichtung effizient und schnell für eine bestimmte Messung ein passendes Modell zur Verfügung stellen, da die Auswahl der trainierten Modelle lokal auf der Vorrichtung stattfindet. In Ausführungsformen können auch mehrere Mastermodelle die ein oder mehreren trainierten Modelle für einen Arbeitsablauf bestimmen.

In einer Ausgestaltung, die mit der vorherigen kombinierbar ist, ist die erfindungsgemäße Vorrichtung ausgestaltet mindestens eines der ein oder mehreren trainierten Modelle zu adaptieren. Das Adaptieren kann ein Trainieren nur eines oder mehrerer Teile des mindestens einen der ein oder mehreren trainierten Modelle umfassen. Zusätzlich oder alternativ kann das Adaptieren ein Trainieren des mindestens einen der ein oder mehreren trainierten Modelle mittels zweiter Daten umfassen. Die zweiten Daten können beispielsweise annotierte erste Daten umfassen. Die Annotationen der ersten Daten können einen Soll-Ausgabewert des mindestens einen trainierten Modells angewendet auf die erfassten ersten Daten, oder eine Bewertung des Ausgabewertes zu einem entsprechenden Eingabewert aus den erfassten ersten Daten umfassen. In Ausführungsformen kann eine basierend auf dem Anwenden der ein oder mehreren trainierten Modelle getroffene mindestens eine Entscheidung bewertet werden. Zum Beispiel kann eine Beleuchtungseinstellung eines Mikroskops, die in Abhängigkeit von einem Anwenden eines trainierten Modells auf Bilddaten eingestellt wurde, von einem Nutzer als schlecht oder unzureichend bewertet werden. Das mindestens eine der ein oder mehreren trainierten Modelle kann in Abhängigkeit einer oder mehrerer negativer Bewertungen von ein oder mehreren Nutzern adaptiert werden. Durch das Adaptieren kann eine Vorhersagegenauigkeit des mindestens einen trainierten Modells, angewendet auf die erfassten ersten Daten, erhöht werden und einen Arbeitsablauf durch bessere Vorhersagen der trainierten Modelle weiter optimieren. Trainierte Modelle können lokal auf der Vorrichtung oder in einer Cloud anhand von aggregierten zweiten Daten adaptiert (feinjustiert) werden. Im Gegensatz zum Training von Modellen benötigt das Adaptieren von Modellen deutlich weniger Trainingsdaten um eine Vorhersagegenauigkeit von trainierten Modellen für eine neue aber ähnliche Klasse von Daten, auf die die Modelle ursprünglich nicht trainiert wurden, zu erhöhen.

In ein oder mehreren Ausgestaltungen der erfindungsgemäßen Vorrichtung, kann diese als Teil eines Systems über eine Netzwerkverbindung, mit einem Server oder einer Cloud kommunizieren. Im Speziellen können ein oder mehrere erfindungsgemäße Vorrichtungen, Arbeitsplatzrechner und Mikroskope oder Mikroskopsysteme, sowie deren Komponenten miteinander kommunizieren. Dabei können Daten (erfasste Daten, wie z. B. Bilder, Gerätedaten, Daten zum Ablauf des Experiments, Modelle oder Teile davon, versteckte Repräsentationen von Daten oder anderweitig bezüglich ihrer Dimensionalität komprimierte Daten, Eingabedaten für das mindestens eine trainierte Modell, die Annotationen über einen Soll-Ausgabewert des mindestens einen trainierten Modells angewendet auf die Eingabedaten, Bewertungen von Ausgabewerten des mindestens einen trainierten Modells, Parameterdaten mindestens einer der ein oder mehreren Komponenten, Nutzereingaben, Fehlermeldungen, Informationen zu Reagenzien, Proben und Materialien, Gerätedaten von Geräten, die im Verlauf einer durch die ein oder mehreren Mikroskope und/oder Mikroskopsysteme durchgeführten Messung gesteuert werden, oder anwenderbezogene Daten) zu einem Server oder einer Cloud geschickt werden. Dort können bestehende Modelle feinjustiert ("Fine-Tuning") und verbessert werden. Dann können automatisch oder halbautomatisch neue, verbesserte Versionen der trainierten Modelle auf die Vorrichtung oder auf mehrere Vorrichtungen geladen und zur Anwendung gebracht werden. Dadurch entsteht ein Feedback nicht nur zwischen dem Experimentablauf mit einem Mikroskop und einem statischen Bildverarbeitungsprozess, sondern das Feedback wirkt sich auch auf den Inhalt der Daten- oder Bildverarbeitung aus und kann Entscheidungen und Bewertungen, die das Modell während des Ablaufs einer Messung macht, ändern. Somit lässt sich ein Arbeitsablauf durch Modifikation von Modellen optimieren und, in manchen Fällen, verändern. Die Steuerung und Organisation der Kommunikation einzelner Systeme mit Mikroskopen oder Gruppen von Mikroskopen sowie die Versionsverwaltung von Modellen kann ein Modell-Manager genannter Teil der Software übernehmen. Der Modell-Manager kann ausgestaltet sein das mindestens eine adaptierte oder feinjustierte trainierte Modell auf mindestens einer der ein oder mehreren Vorrichtungen zu implementieren. Dies kann während des Ablaufs einer Messung oder während des Ausführens des Arbeitsablaufes durch die ein oder mehreren Komponenten des mindestens einen Mikroskops und/oder Mikroskopsystems geschehen.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 eine schematische Darstellung einer erfindungsgemäßen Vorrichtung zur Optimierung von Arbeitsabläufen nach einer Ausführungsform,
Figur 2 eine schematische Darstellung eines erfindungsgemäßen Systems zur Optimierung von Arbeitsabläufen nach einer Ausführungsform,
Figur 3 eine schematische Darstellung eines erfindungsgemäßen Systems zur Optimierung von Arbeitsabläufen nach einer Ausführungsform,
Figur 4 eine schematische Darstellung eines erfindungsgemäßen Verfahrens zur Anwendung von Modellen nach einer Ausführungsform,
Figur 5 eine schematische Darstellung eines erfindungsgemäßen Verfahrens zur Anwendung von Modellen nach einer Ausführungsform,
Figur 6 eine schematische Darstellung eines erfindungsgemäßen Systems für die Bereitstellung von Deep Learning Modellen in Containern nach einer Ausführungsform,
Figur 7 eine schematische Darstellung eines erfindungsgemäßen Systems für die Bereitstellung von Deep Learning Inferenz als Webservice nach einer Ausführungsform,
Figur 8 eine schematische Darstellung eines erfindungsgemäßen Systems für das Training von Modellen auf einem Einzelplatzrechner oder auf einem Server im lokalen Netzwerk nach einer Ausführungsform,
Figur 9 eine schematische Darstellung eines erfindungsgemäßen Systems für das Training von Modellen als Webservice in der Cloud nach einer Ausführungsform,
Figur 10 eine schematische Darstellung eines Modell-Managers nach einer Ausführungsform,
Figur 11 eine schematische Darstellung eines Modell-Stores nach einer Ausführungsform,
Figur 12 ein schematisches Flussdiagramm einer Ausführungsform des erfindungsgemäßen Verfahrens, und
Figur 13 ein schematisches Flussdiagramm einer Ausführungsform des erfindungsgemäßen Verfahrens.

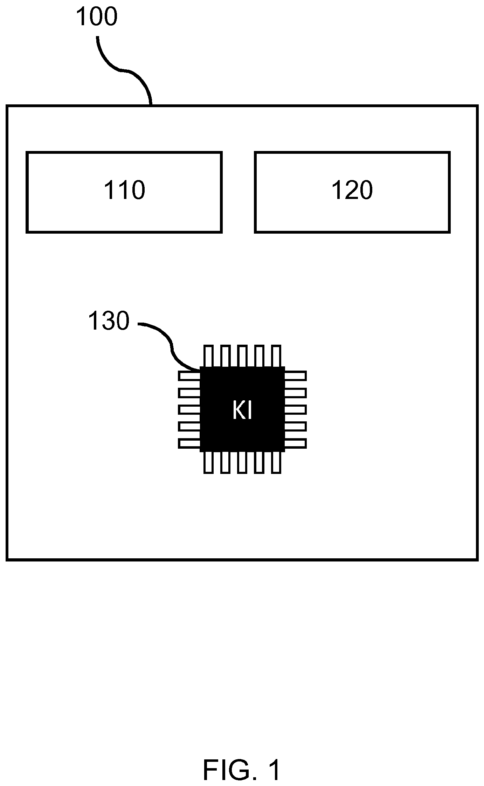

Figur 1 zeigt eine Vorrichtung 100, die ein oder mehrere Prozessoren 110 und ein oder mehrere Speichermedien 120 umfasst. Die Vorrichtung kann Teil eines Mikroskops und/oder eines Mikroskopsystems sein. Alternativ kann die Vorrichtung 100 auch räumlich von einem Mikroskop oder Mikroskopsystem getrennt sein und über ein Netzwerk mit dem Mikroskop oder Mikroskopsystem verbunden sein. Ein Mikroskopsystem kann ein oder mehrere Komponenten, Module, Mikroskope und/oder Subsysteme umfassen. Die ein oder mehrere Komponenten, Module, Mikroskope und/oder Subsysteme können über ein Netzwerk, beispielsweise einem Funknetz, miteinander in Verbindung stehen. Mikroskopsysteme können alle Subsysteme, Komponenten oder Module welche im Rahmen einer Mikroskopie-Aufgabe zur Lösung der gestellten Aufgabe beitragen umfassen. Die Subsysteme, Komponenten oder Module können sich dabei am Mikroskop selbst befinden, wie beispielsweise Kameras, Detektoren, Mikroskop-Tische, Motoren, Software-Module, Firmware-Module etc. Sie können sich aber auch außerhalb der Mikroskope befinden, wie beispielsweise Datenbanken, Netzwerk-Anbindungen, Analyse-Software, Mikrotome, Pipettierautomaten, Roboter, andere Mikroskope, Cluster von Mikroskopen oder Arbeitsplatzrechner etc.

Bei der Vorrichtung 100 kann es sich um einen Kleinstrechner, Arbeitsplatzrechner, Computer oder Embedded-Computer handeln. Die ein oder mehreren Prozessoren 110 können Rechenbeschleuniger, wie Graphical Processing Units (GPUs), TensorFlow Processing Units (TPUs) auf Machine Learning (ML)- und/oder Deep Learning (DL)- spezialisierte Application Specific Integrated Circuit (ASICs) oder Field Programmable Gated Arrays (FPGAs) oder mindestens eine Central Processing Unit (CPU) umfassen. Eine anwendungsspezifische integrierte Schaltung (englisch Application Specific Integrated Circuit, ASIC, auch Custom Chip) ist eine elektronische Schaltung, die als integrierter Schaltkreis realisiert werden kann. Wegen der Anpassung ihrer Architektur auf ein spezifisches Problem arbeiten ASICs sehr effizient und um einiges schneller als eine funktionsgleiche Umsetzung per Software in einem Mikrocontroller. TensorFlow Processing Units (TPUs), auch TensorFlow-Prozessoren, sind anwendungsspezifische Chips und können Anwendungen im Rahmen von maschinellem Lernen im Vergleich zu CPUs beschleunigen. Diese oder ähnliche spezialisierte Hardware kann genutzt werden um Deep Learning-Aufgaben optimal zu lösen. Insbesondere Inferenz, die Größenordnungen weniger Rechenleistung benötigt als das Training, also die Entwicklung eines Modells, funktioniert auch auf üblichen CPUs. Des Weiteren kann die Vorrichtung in Ausführungsformen ein oder mehrere trainierte Modelle 130 umfassen. Mit Hilfe der ein oder mehrere trainierte Modelle 130 können Vorrichtungen befähigt werden mittels künstlicher Intelligenz (KI) Entscheidungen den Arbeitsablauf von Mikroskopen oder Mikroskopsystemen betreffend zu treffen. Die ein oder mehreren trainierten Modelle 130 können durch die ein oder mehreren Prozessoren ausgeführt werden.

Inferenz umfasst eine Übertragung eines trainierten neuronalen Netzes auf eine Anwendungsmaschine oder Vorrichtung, derart, dass die Anwendungsmaschine oder Vorrichtung durch diese Übertragung zusätzliche "Intelligenz" gewinnt. Die Anwendungsmaschine oder Vorrichtung kann so in die Lage versetzt werden eine gewünschte Aufgabe selbstständig zu lösen.

Somit ergibt sich eine kognitiv erweiterte Vorrichtung. Kognitiv erweitert bedeutet, dass die Vorrichtung durch Einsatz neuronaler Netzwerke (bzw. Deep Learning Modelle) oder anderer Maschinenlernverfahren dazu befähigt werden kann, Bildinhalte oder andere Daten semantisch zu erkennen und zu verarbeiten.

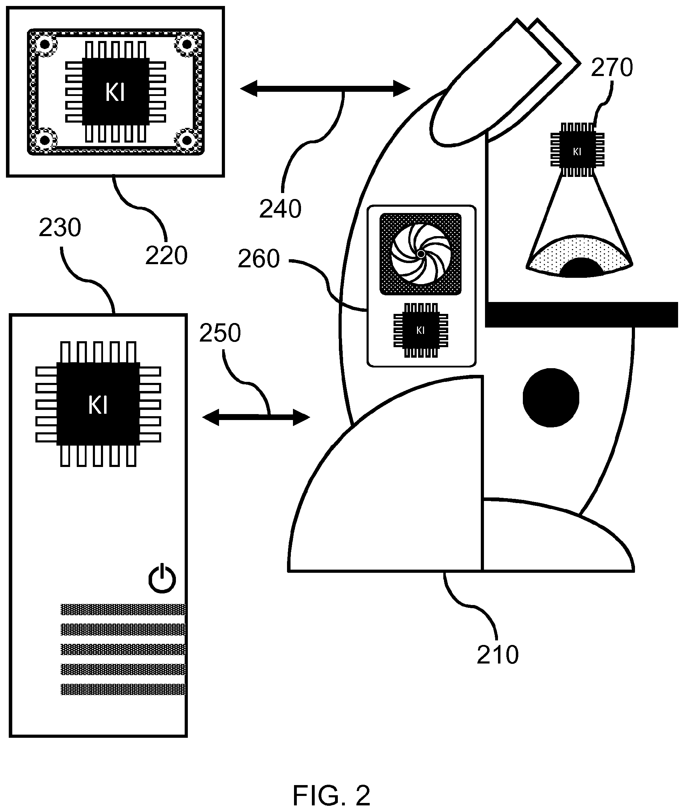

Figur 2 zeigt in einer Ausführungsform eine Kommunikation eines Mikroskops 210 mit Kl-befähigten Vorrichtungen 220 und 230. Ein einzelnes Mikroskop kann dabei selbst Hardwarebeschleunigung und/oder einen Kleinstrechner umfassen, die die Ausführung von trainierten Modellen (z. B. neuronalen Netzen) ermöglichen. Trainierte Modelle können Deep-Learning-Ergebnis-Netze umfassen und es Kl-befähigen. Diese neuralen Netze können Ergebnisse darstellen, wobei diese durch mindestens einen Deep Learning Prozess und/oder mindestens einer Deep Learning Methode erlernt wurden. Diese neuronalen Netze kondensieren zu einem bestimmten Aufgaben-Ensemble gesammeltes Wissen in geeigneter Weise durch automatisiertes Lernen, derart, dass eine bestimmte Aufgabe fortan automatisiert und mit höchster Qualität durchgeführt werden kann.

Das Mikroskop 210 kann ein oder mehrere Komponenten 260 und 270 umfassen. Verschiedene Komponenten des Mikroskops, wie Aktoren 260 und Sensoren 270 können ihrerseits Kl-befähigt sein und Kleinstrechner oder FPGAs umfassen. Mikroskop 210 umfasst mindestens eine Komponente, beispielsweise Sensor 270, die ausgestaltet ist Daten zu erfassen. Die erfassten Daten können Bilddaten und Metadaten umfassen. Die mindestens eine Komponente kann mehrere unterschiedliche Komponenten, die jeweils unterschiedliche Daten erfassen, umfassen. In einer Ausführungsform umfassen die erfassten Daten strukturierte Daten, wie beispielsweise Extensible Markup Language (XML)-Daten. Dies ermöglicht die einheitliche Bereitstellung und Verarbeitung der erfassten Daten von verschiedenen Komponenten eines oder mehrerer Mikroskope oder Mikroskopsysteme.

Figur 2 und alle folgenden Figuren zeigen Mikroskope nur beispielhaft als Lichtmikroskope. In Ausführungsformen können Mikroskope alle Arten von Mikroskopen umfassen. Zum Beispiel kann ein Mikroskop eines der folgenden umfassen: ein Lichtmikroskop, ein Stereo-Mikroskop, ein Konfokalmikroskop, ein Spaltlampenmikroskop, ein Operationsmikroskop, ein Digitalmikroskop, ein USB-Mikroskop, ein Elektronenmikroskop, ein Rasterlektronenmikroskop, ein Spiegelmikroskop, ein Fluoreszenzmikroskop, ein Focusedlon-Beam-Mikroskop (FIB), ein Helium-Ionen-Mikroskop, ein Magnetresonanzmikroskop, ein Neutronenmikroskop, ein Raster-SQUID-Mikroskop, ein Röntgenmikroskop, ein Ultraschallmikroskop, ein Lichtscheibenmikroskop (SPIM) oder ein akustisches Mikroskop, etc.

Das Mikroskop 210 ist ausgestaltet um mit einem Embedded-System 220 und mit seinem Steuerrechner 230 zu kommunizieren. In einem Beispiel kommuniziert das Mikroskop gleichzeitig bzw. parallel mit ein oder mehreren Embedded-Systemen 220, die hardwarebeschleunigte KI besitzen, und mit seinem Steuerrechner 230 über bidirektionalen Kommunikationsverbindungen 240 und 250. Über die bidirektionalen Kommunikationsverbindungen 240 und 250, z. B. einen Deep Learning-Bus, können Daten (wie z. B. Bilder, Geräteparameter, Experimentalparameter, biologische Daten) und Modelle, deren Bestandteile oder versteckte Repräsentationen ("hidden representations") von Daten ausgetauscht werden. Dabei können die Modelle während des Ablaufs eines Experiments verändert werden (durch Training oder Adaptieren von Teilen eines Modells). Außerdem können neue Modelle auf ein Mikroskop oder eine Vorrichtung geladen und zum Einsatz gebracht werden. Dies kann geschehen aufgrund von Erkennung und Interpretation der Daten, die ein Modell selbst geleistet hat.

Modelle können auch anwenderbezogene Nutzungsdaten auswerten, und zwar dergestalt, dass sich die Nutzerfreundlichkeit verbessert. Daten, die hierzu verwendet werden können sind unter anderem Mausbewegungen, Klickanzahl, Zeit zwischen den Klicks, Interaktion mit Bilddaten, und Einstellungen von Geräteparametern, die der Nutzer vorgenommen hat. Dadurch stehen Daten zur Verfügung, die die Bedienbarkeit von Mikroskopen verbessern können. Ebenso kann ein trainiertes Modell während des Experiments die Nutzerschnittstelle dynamisch oder nicht-dynamisch anpassen, so dass die relevanten Bedienelemente prominent hervorgehoben und/oder zueinander in räumliche Nähe gebracht werden und so eine unmittelbare Verbesserung der Nutzerfreundlichkeit einhergeht. Dies ermöglicht eine kontinuierliche Verbesserung der Nutzerfreundlichkeit mit Hilfe einer lernenden Nutzerschnittstelle.

Für die kontinuierliche Verbesserung von Modellen, werden in einer Ausführungsform Daten von möglichst vielen Anwendern erfasst. Die Anwender können ihre Präferenzen, welche Daten erhoben und anonym verarbeitet werden dürfen, angeben. Außerdem kann es an der für den Ablauf des Experiments richtigen Stelle in der Nutzeroberfläche eine Möglichkeit geben, die Vorhersage von Modellen zu bewerten. In einem Beispiel könnte das System die Zahl transfizierter Zellen angeben. In einer Ausführungsform hat der Anwender die Möglichkeit diesen Wert zu überschreiben. Damit steht wieder ein neuer Datenpunkt für die Feinjustage eines Modells zur Verfügung. Der Anwender hat somit den Vorteil, dass er immer wieder verbesserte Modelle herunterladen kann. Für den Hersteller wiederum öffnet sich die Möglichkeit, sein Angebot beständig zu verbessern.

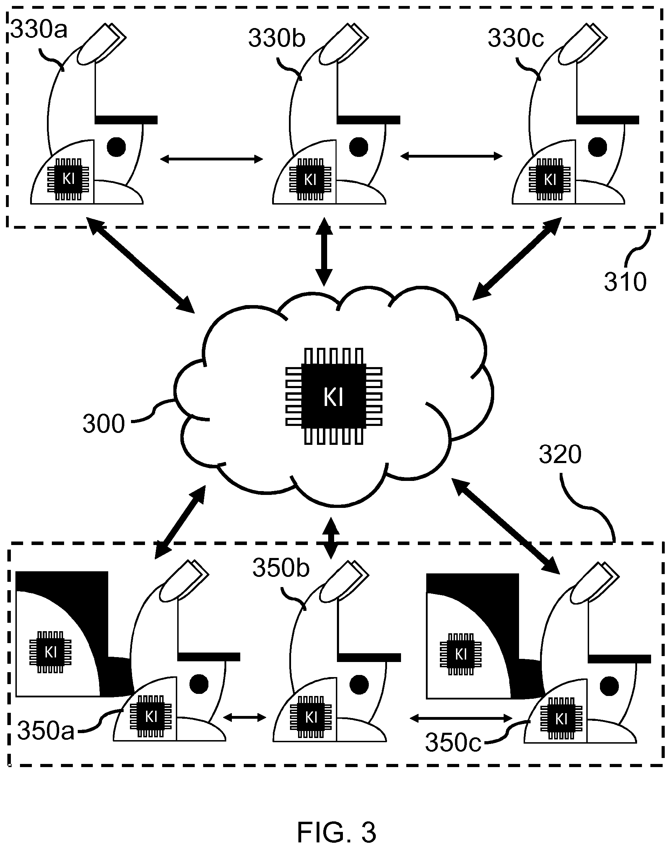

Figur 3 zeigt mehrere Mikroskope 330a, 330b und 330c, die zu einem Verbundsystem 310 aus Mikroskopen zusammengefasst sind. Des Weiteren zeigt Figur 3 ein heterogenes Verbundsystem 320, das Mikroskopsysteme 350a und 350c, sowie ein Mikroskop 350b umfasst. Die Verbundsysteme sind nicht auf eine bestimmte Anzahl an Mikroskopen und/oder Mikroskopsystemen festgelegt. Je nach Anwendungsbereich und Umfang einer Messung kann die Anzahl von Mikroskopen und Mikroskopsystemen variieren.

Mikroskope 330 als auch Mikroskopsysteme 350 können ein oder mehrere Kl-befähigte Komponenten umfassen. Mikroskopsysteme können, wie die Mikroskope aus Figur 2, mit anderen Kl-befähigten Vorrichtungen oder Systemen über ein Netzwerk kommunizieren. Das Mikroskopsystem 350 kann beispielsweise mit ein oder mehreren Embedded-Systemen und/oder ein oder mehreren Steuerrechnern oder Arbeitsplatzrechnern über bidirektionale Verbindungen Daten austauschen (nicht gezeigt). Diese Daten können vom Mikroskopsystem oder von Komponenten des Mikroskopsystems erfasste Daten, Modelle oder versteckte Repräsentationen umfassen. Mikroskope 330 und/oder Mikroskopsysteme 350 können integrierte Kleinstrechner mit Hardwarebeschleunigung für Kl-Modelle, wie zum Beispiel GPUs, TPUs, auf ML- und/oder DL- spezialisierte ASICs oder FPGAs umfassen.

In Figur 3 ist des Weiteren die Kommunikation von Mikroskopen 330 und Mikroskopsystemen 350 in Verbundsystemen dargestellt. Die Mikroskope 330 oder Mikroskopsysteme 350 eines Verbundsystems 310, sowie deren attachierte Komponenten, wie Embeddedrechner oder Systemrechner (nicht gezeigt), können sowohl untereinander als auch mit einer Cloud 300 oder einem Server kommunizieren, zum Beispiel zum Austausch von Daten oder Modellen.

Die Kommunikation im Verbund kann der Koordination komplexer, multimodaler und/oder parallelisierter Experimente oder Messungen dienen. Dort können Steuersignale, Daten (Bilder, Geräteparameter, versteckte Repräsentationen) und Modelle ausgetauscht werden. Insbesondere können Modelle, die auf einer Vorrichtung in Zusammenhang mit einem Mikroskop, Mikroskopsystem oder Verbundsystem trainiert oder adaptiert wurden, mit den anderen Vorrichtungen im Verbund, in anderen Verbünden oder mit der Cloud ausgetauscht werden. Dies geschieht mittels Management von Nutzerrechten und Projektzugehörigkeit. Die Anwender können hierbei selbst entscheiden, wer die anfallenden Datenströme und Modelle sehen und nutzen darf. Die in die Cloud hochgeladenen Modelle aggregieren die Erfahrung aller beteiligten Labors oder Einrichtungen und ermöglichen so die fortwährende Weiterentwicklung der Modelle, die allen Anwendern zur Verfügung gestellt werden kann.

Wie bereits erwähnt, kann der Austausch von Modellen und Daten zwischen Arbeitsgruppen und Institutionen mit der und über die Cloud stattfinden. Mikroskope, Mikroskopsysteme und deren attachierte Komponenten können untereinander und mit Arbeitsplatzrechnern über ein Deep Learning-Bussystem kommunizieren. Dazu kann spezialisierte Hardware eingesetzt werden und/oder eine TCP/IP Netzwerkverbindung oder ein Äquivalent. Über dieselbe Verbindung kommuniziert eine Arbeitsgruppe mit anderen Arbeitsgruppen die jeweils ein oder mehrere Mikroskope oder Mikroskopsysteme umfassen, mit Serversystemen, der Cloud und/oder anderen Institutionen. Alle gelernten Informationen, Daten, versteckten Repräsentationen, Modelle und Metadaten können untereinander ausgetauscht werden und durch einen Modell-Manager und mit Rechtemanagement verwaltet werden.

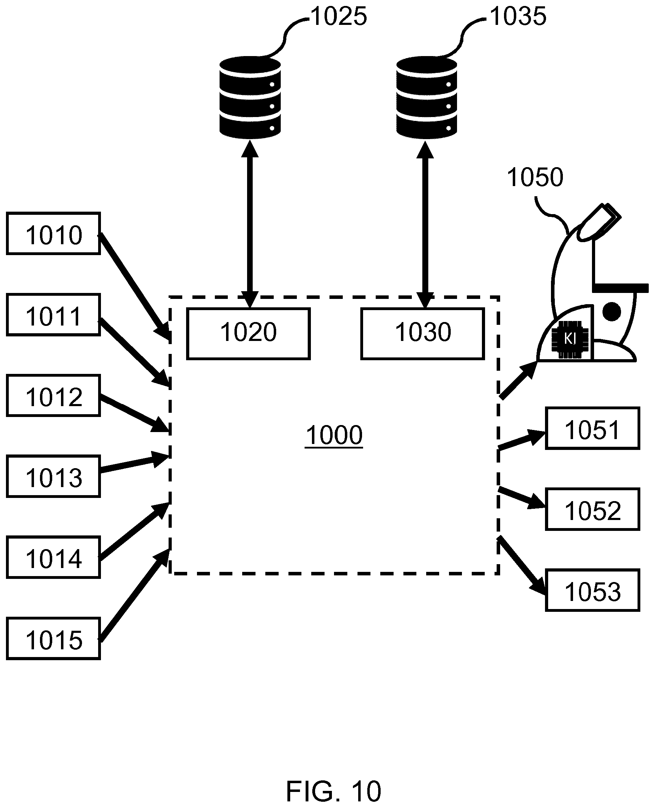

Die in Figuren 2 und 3 beschriebene Struktur zur Kommunikation zwischen Mikroskopen und deren Komponenten kann auch für die Kommunikation zwischen Mikroskopen, Mikroskopsystemen und Verbünden aus Mikroskopsystemen, sowie Arbeitsgruppen und Institutionen verwendet werden. Zur Kommunikation kann ein Deep Learning Bussystem mit folgenden Eigenschaften verwendet werden:
- Vernetzung aller Subsysteme, also Mikroskopkomponenten, Sensoren und Aktoren untereinander und mit geeigneten Modellen. Diese Subsysteme können intelligent sein, also selbst neuronale Netze oder Maschinenintelligenz besitzen, oder nicht intelligent sein.
- Die Vernetzung aller Subsysteme und Module, Mikroskope und Mikroskopsysteme ergibt eine Hierarchiestruktur mit Domänen und Subdomänen.
- Alle Domänen und Subdomänen sowie die zugehörigen Systeme und Subsysteme können zentral erfasst und durchsuchbar sein, damit ein Modell-Manager (siehe Figur 10) Modelle auf sie verteilen kann.
- Zur Kommunikation bei zeitkritischen Anwendungen kann eine spezialisierte Hardware für das Bussystem verwendet werden. Alternativ, kann auch eine Netzwerkverbindung nach TCP/IP oder einem geeigneten Webstandard verwendet werden.
- Das Bussystem muss mindestens die folgenden Daten verwalten: ID für jede Komponente (Aktoren, Sensoren, Mikroskope, Mikroskopsysteme, Computerressourcen, Arbeitsgruppen, Institutionen); Rechteverwaltung mit Autor, Institution, Schreib-/Leserechte der ausführenden Maschine, gewünschtes Bezahlsystem; Metadaten aus Experimenten und Modellen; Bilddaten; Modelle und deren Architektur mit gelernten Parametern, Aktivierungen und versteckte Repräsentationen; Benötigte Schnittstellen; Benötigte Laufzeitumgebung mit Umgebungsvariablen, Bibliotheken etc.; Alle weiteren Daten soweit vom Modell-Manager und dem Rechtemanagement benötigt.
- Durch die Vielzahl der unterschiedlichen Kl-befähigten Komponenten entsteht eine Hierarchiestruktur mit Domänen und Subdomänen. Alle Komponenten sind in einem Verzeichnis erfasst und auffindbar. Auf jeder Ebene (also dem Mikroskop attachierte Komponente, Mikroskop/-system, Arbeitsgruppe, Computer-Ressourcen, Institution) findet Rechteverwaltung statt. Dadurch entsteht eine logische und hierarchische funktionale Struktur, die die Zusammenarbeit aller Akteure ermöglicht.

Die Verwendung offener Standards für Kommunikation und Datenspeicherung ermöglicht die Erweiterung einzelner Mikroskope zu einem Verbund von Mikroskopen oder verteilten Arbeitsgruppen, beispielsweise weltweit, die miteinander in Verbindung stehen, voneinander lernen und die Geräte so kontinuierlich verbessern, sowohl für Einzelanwender wie auch in großen Forschungsnetzwerken.

Mikroskope bestehen aus funktional vernetzten Subsystemen, Komponenten oder Modulen, die miteinander in Verbindung stehen. Diese Verbindung besteht auf der Ebene von Mikroskopsubsystemen, ganzen Mikroskopen und Verbünden oder Netzwerken von Mikroskopen. Auf jeder dieser drei Ebenen kann man in jeweils höherer Abstraktionsebene von Modulen oder Komponenten sprechen. Jedes Modul kommuniziert über schlanke Schnittstellen, die über die jeweilige Hardware oder Software im Inneren des Moduls agnostisch sind und über eine Nutzer-Rechteverwaltung verfügen. Jedes Modul zeichnet seinen Zustand in standardisierten Formaten beständig auf. Diese Art der Kommunikation und der Erfassung von Zustandsparametern ist auch auf Nicht-Mikroskope anwendbar, wie Laborautomation, Probenpräparationsgeräte, Geräte zum Pipettieren von Flüssigkeiten, Klimakammern, u.v.a.m.

Die Kommunikation kann sowohl zwischen einem einzelnen Mikroskop (siehe Figur 2), einem Mikroskopsystem (siehe Figur 2 und 3) oder einem Verbund von Mikroskopen und Mikroskopsystemen (siehe Figur 3) und deren jeweiligen attachierten Komponenten (z. B. Aktoren und Sensoren), Embedded-Computern, einem oder mehreren Systemrechnern und der Cloud (siehe Figur 3) stattfinden. Von Bedeutung ist in dieser Ausführungsform die Möglichkeit, Daten, Modelle und versteckte Repräsentation der Daten, die als in der Dimensionalität reduzierte Formen der Daten angesehen werden können, beständig auszutauschen und mit der Cloud zu synchronisieren. Letzteres ermöglicht die beständige Weiterentwicklung der Modelle, die so von der gesammelten Erfahrung aller Anwender profitieren und neue Aufgaben lösen können. Andernfalls würden große Datenmengen für das Training von Deep Learning-basierten Modellen benötigt werden.

Durch die Vernetzung der Mikroskope, Mikroskopsysteme, Verbundsysteme und der Cloud entstehen mehrere Formen von Feedback:
1) Feedback-Mikroskopie: Während des Ablaufs eines Experiments werden die Daten asynchron von einem vordefinierten Modell oder Bildverarbeitungsablauf bewertet und basierend auf extrahierter Information werden Entscheidungen getroffen, die das laufende Experiment beeinflussen (z. B. bzgl. Ort der Aufnahme, Geschwindigkeit der Aufnahme oder Bildaufnahmemodalitäten wie Beleuchtung, Detektion oder Optiken).
2) Feedback in das Modell hinein: Da die Modelle beständig weiter feinjustiert ("Fine-Tuning") werden können und ihre Vorhersagegenauigkeit dadurch immer weiter verbessert wird, entsteht ein Feedback, das das Modell, welches die Daten laufend bewertet, selbst noch zur Laufzeit eines Experiments verändern und verbessern kann.
   Beim Feedback kann ein Ensemble von Methoden oder Verfahren derart gestaltet sein, dass mittels Deep Learning gefundene Ergebnisse auf dem Mikroskopie-System oder auf Mikroskopie Sub-Systeme zurückwirken, derart, dass eine Art Rückkopplungsschleife entsteht. Das System wird durch die Rückkopplung asymptotisch in einen optimalen und stabilen Zustand überführt oder adaptiert sich geeignet (Systemeinstellungen) um bestimmte Objekte optimaler aufnehmen zu können.
3) Basierend auf Bilderkennung und/oder Bewertung von aufgenommenen Daten können Modelle zur Laufzeit ausgetauscht und nachgeladen werden, um andere Objekttypen, andere Färbungen und generell andere Anwendungen zu unterstützen. Dies kann sogar während der Laufzeit eines Experiments oder einer Messung geschehen, wodurch das Mikroskop sehr dynamisch und anpassungsfähig wird.

Diese Formen von Feedback ermöglichen ein neues Verfahren zur Optimierung von Arbeitsabläufen bei Mikroskopmessungen.

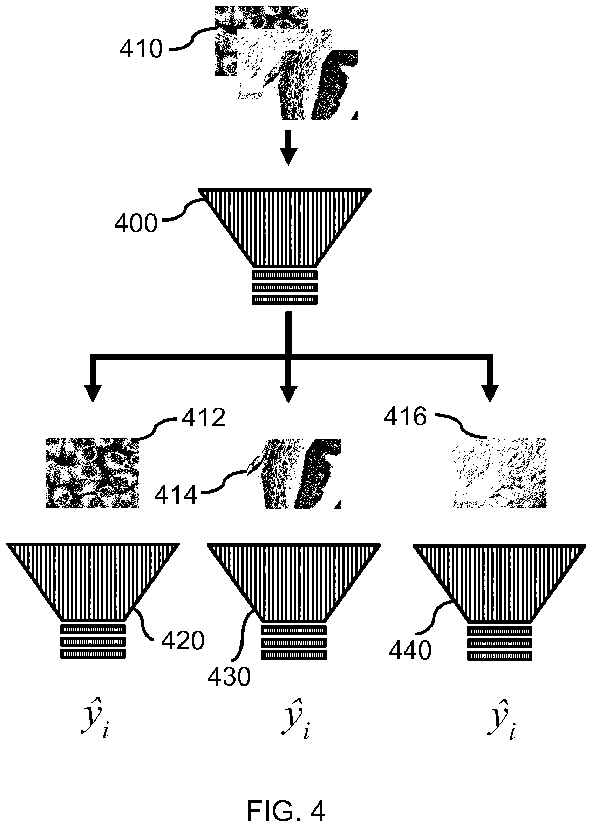

Figur 4 zeigt eine hierarchische Anordnung für die Inferenz auf Daten mit großer Variabilität. So können Mikroskope in der Grundlagenforschung oder klinischen Anwendung im Einsatz sein, wo sich Bilddaten und andere Datentypen stark unterscheiden. Daher kann es zweckmäßig sein, einen vorgelagerten Klassifizierungsschritt mit einem "Mastermodell" vorzunehmen und das richtige Modell für die entsprechende Datendomäne automatisch auszuwählen. Dieses Prinzip, ein hierarchisches Ensemble von Modellen zu verwenden, ist nicht auf eine Datendomäne beschränkt, sondern kann unterschiedliche Datentypen und Domänen umfassen. Ebenso können mehrere hierarchisch organisierte Modellensembles kaskadiert werden um Datendomänen nach mehreren Dimensionen zu ordnen und trotz unterschiedlicher Anwendungen und Variabilität in den Daten eine automatische Inferenz durchführen zu können. Figur 4 zeigt Beispiele von Daten (in diesem Fall Bilddaten 410) mit einer hohen Variabilität. So können diese z. B. Fluoreszenzbilder von Einzelzellen 412 sein, HE-gefärbte Gewebeschnitte 414 oder Interferenzkontrastbilder 416. Um die Inferenz dennoch effektiv und mit hoher Genauigkeit durchführen zu können, wird ein Mastermodell 400 darauf trainiert, zwischen den verschiedenen Datendomänen der Bilddaten 410 zu unterscheiden. Das Ergebnis dieser Klassifizierung ermöglicht ein Bestimmen eines passenden Modells 420, 430 und 440 für eine Domäne der entsprechenden erfassten Bilddaten 412, 414, 416. Das passende Modell 420, 430 und 440 für diese Domäne kann dann automatisch auf die entsprechenden Bilddaten 412, 414, 416 angewendet werden. Mittels der Modell 420, 430 und 440 und deren Inferenz kann dann eine gewünschte Vorhersage ŷᵢ getroffen werden. Eine Entscheidung den Arbeitsablauf betreffend kann auf dieser Vorhersage basieren. So kann ein "Master"- oder Weltmodell eine Klassifizierung des Einsatzgebiets vornehmen und geeignete Modelle automatisch auswählen. Zum Beispiel können während eines Arbeitsablaufes eines Mikroskops Bilddaten von HE-gefärbten Gewebeschnitten 414 erfasst werden. Ein Mastermodell 400 kann auf diese Bilddaten angewendet werden und das trainierte Modell 412 bestimmen. Das trainierte Modell 412 kann ein trainiertes Modell sein, das speziell für Bilddaten von HE-gefärbten Gewebeschnitten trainiert wurde. Das bestimmte Modell 412 kann dann automatisch auf die Bilddaten von HE-gefärbten Gewebeschnitten 414 angewendet werden und präzise Vorhersagen treffen.

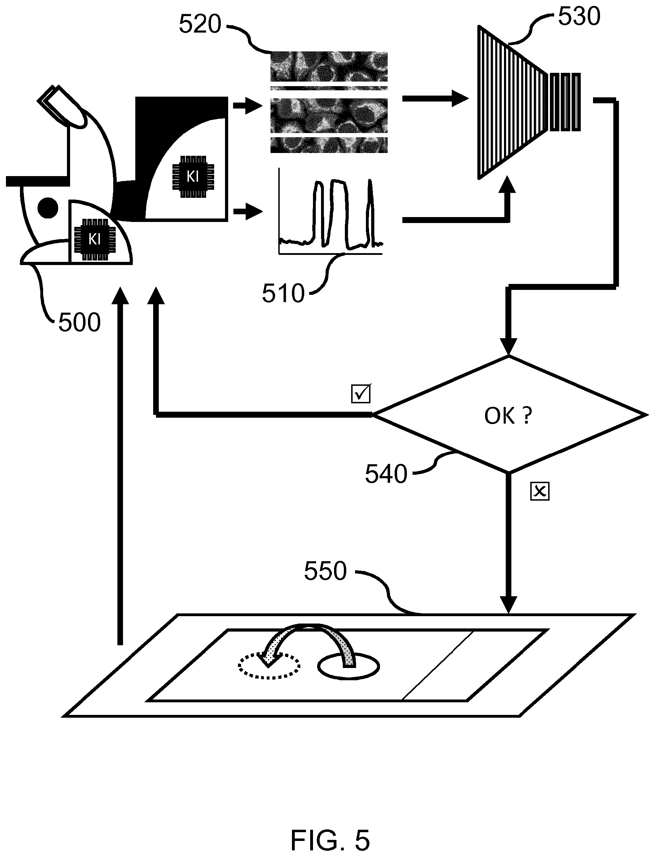

Figur 5 zeigt einen Anwendungsfall eines trainierten Modells 530. Das Modell 530 wird auf Daten 520 und 510 angewendet die während eines Arbeitsablaufes durch ein Mikroskops 500 und dessen Komponenten (z. B. Sensoren) erfasst wurden. Das laufende Experiment oder die laufende Messung produziert fortlaufend Daten, die unterschiedlicher Art sein können und von unterschiedlichen Komponenten oder Sensoren erfasst werden. Dies können im Fall von Figur 5 Bilder 520 und Metadaten oder Zustandsparameter 510 sein. Die Daten 520 und 510 werden von einem vortrainierten Modell 530 analysiert. Basierend auf dem Anwenden des Modells und/oder der Analyse kann dann eine Entscheidung 540 getroffen werden. Das trainierte Modell 530 kann ein oder mehrere verschiedenartige Datensätze auswerten und/oder analysieren und basierend auf der Analyse Entscheidungen treffen die den Arbeitsablauf eines Mikroskops und/oder dessen Komponenten beeinflussen. In Fall von Figur 5 kann mittels Modell 530 bestimmt werden, ob alle Parameter im Normbereich liegen. In diesem Fall kann das Experiment oder die Messung fortgesetzt werden. Wenn nicht, wie zum Beispiel hier im Falle der Überbelichtung eines Detektors, kann das laufende Experiment oder die Messung pausiert und die Aufnahme der letzten Position wiederholt werden, wie in Schritt 550 gezeigt. Hierfür können in Ausführungsbeispielen zusätzlich Parameter von Komponenten des Mikroskops 500 geändert werden oder auch Fehlermeldungen oder Warnungen verschickt werden. Danach kann das Experiment oder die Messung wie geplant fortgesetzt werden. Jegliche Art von Daten, wie Bilder oder Metadaten, Geräteparameter, Vorhersagen anderer Modelle oder Nutzereingaben können zur Fehlererkennung verwendet werden. Die Entscheidungen die auf der Analyse des Modells 530 basieren, können sich auf alle Kontrollparameter eines Mikroskops, Mikroskopsystems, einem Verbund aus Mikroskopen oder deren attachierten Komponenten sowie den Ablauf anderer Laborgeräte oder Mobilgeräte des Anwenders oder Service-Technikers auswirken. Zum Beispiel kann eine Fehlermeldung an einen Service Techniker oder eine Cloud verschickt werden. Wird die Fehlermeldung an eine Cloud geschickt, können dort basierend auf dieser und anderer Fehlermeldungen von derselben Quelle oder auch von anderen Quellen wiederum Modelle mittels künstlicher Intelligenz trainiert werden. Diese neuen trainierten Modelle können dann Entscheidungen treffen um automatisch die Fehler zu beheben und so einen Abbruch einer Messung oder eines Experiments verhindern.

Des Weiteren erlaubt die Aufzeichnung von Zustandsparametern von Modulen oder Komponenten eines Mikroskopsystems eine beständige Selbstdiagnose. Diese Selbstdiagnose erlaubt eine Qualitätskontrolle der experimentellen Ergebnisse sowohl während des Ablaufs einer Messung als auch danach. Weiterhin erlaubt die Selbstdiagnose die automatische, halbautomatische oder manuelle Kontrolle durch einen technischen Service oder das Auslösen von Serviceeinsätzen im Bedarfsfall, so dass ein reibungsloser Ablauf von Experimenten und/oder Messungen garantiert werden kann. Dies erlaubt eine hohe Verfügbarkeit der Mikroskope durch die Überwachung von Geräteparametern auf der Ebene von einzelnen Modulen oder Komponenten.

Es können für alle sensorisch oder logisch erfassten Geräteparameter Normbereiche im Sinne von Intervallen mit Schwellwerten oder Erwartungswerte im statistischen Sinne definiert werden. Bei Verlassen des festgelegten Intervalls kann das Mikroskop selbsttätig ein Event auslösen, das von anderen Mikroskopen, dem Anwender oder dem Servicetechniker interpretiert werden kann. Ebenso kann ein trainiertes Modell unüberwacht nach Anomalien in Datenströmen suchen und beim Auftreten von Anomalien ebenso entsprechende Events auslösen. Das Event wird wiederum über das Netzwerk z. B. über Web-APIs verschickt und gelangt so zu der Steuersoftware anderer Mikroskope, zur Nutzerschnittstelle des Anwenders, auf das Mobilgerät des Service-Technikers oder als Trainingsdaten in die Cloud.

In Ausführungsformen gibt es ein intelligentes Fehlermanagement. Fehlermeldungen, die vom Mikroskop generiert werden, können kontinuierlich gesammelt und von Modellen ausgewertet werden. In der Entwicklungsabteilung des Herstellers kann eine Analyse dieser Fehlermeldungen und ein Erstellen von Trainingsdatensätzen zum überwachten oder nicht überwachten Training von Modellen, die dann bestimmte Fehler erkennen und automatisch Maßnahmen zu deren Überwindung einleiten können, erfolgen. Diese trainierten Modelle können dann zusätzlich auf eine erfindungsgemäße Vorrichtung über beispielsweise WiFi, Kabel, Bluetooth, Light, Stick, Disc etc. geladen und ausgeführt werden. Dies erlaubt es dem Mikroskop eine Art "Selbstheilungskraft" zu entwickeln, indem im Fehlerfall der Ablauf nicht einfach zum Stillstand kommt oder die experimentellen Daten unbrauchbar werden, sondern das Mikroskop seinen eigenen Zustand so umprogrammiert oder Geräteparameter so verändert, dass ein reibungsloser Ablauf weiter möglich ist (s. Figur 5). Außerdem kann das Mikroskop den Anwender per Mobilgerät über Probleme informieren und zur Eingabe auffordern, um Entscheidungen zu treffen. Ebenso ist ein nicht überwachtes ("Unsupervised Learning") Training von Modellen möglich, das schon während des Experiments erfolgen kann, um zum Beispiel ungewöhnliche oder gefährliche Szenarien zu erkennen. Dann kann der Anwender davor gewarnt werden und gegensteuern oder über potentiell schädliche Bedienfehler informiert werden. Dadurch kann die Sicherheit bei Experimenten erhöht werden.

Treten Schwankungen z. B. an der Laserleistung, der Verstärkungsspannung von Sensoren oder der Temperatur von Klimakammern auf, werden die experimentellen Ergebnisse möglicherweise negativ beeinflusst. Dies aufzuzeichnen und automatisch zu erkennen mit Hilfe von Modellen erlaubt es, die Qualität der Daten zu beurteilen. Das Mikroskop kann so ganze Experimente oder Teile davon wiederholen, wenn Qualitätsprobleme in den Daten während der Aufnahme registriert und erkannt wurden. Dadurch verbessert sich die Produktivität des Anwenders, da unnötige manuelle Wiederholungen vermieden werden und die Interpretierbarkeit der Daten steigt, weil unerwartete Phänomene in dem biologischen System mit Geräteparametern korreliert werden können. So könnte zum Beispiel die Zellteilung langsamer erfolgen, wenn die Temperatur abfällt. Dies kann automatisch erkannt werden und der Anwender wird benachrichtigt und kann entscheiden, ob das Experiment fortgeführt, abgebrochen oder wiederholt werden soll. Die aufgezeichneten Geräteparameter und Zustandsparameter sowie deren Interpretation durch das Modell und das dazu verwendete Modell können zusammen in einem offenen Format abgespeichert werden. Damit wird das Experiment vollständig reproduzierbar.

In Fällen, in denen Daten über das Experiment, die Probe, die Probenvorbereitung und den Ablauf des Experiments vorliegen, können per Modell Vorhersagen darüber getroffen werden, wann nötige Reagenzien knapp werden und es kann eine Bestellung dieser chemischen oder biologischen Reagenzien automatisch oder halbautomatisch vorgenommen werden. Automatische oder halbautomatische Nachbestellung von Reagenzien und Materialen garantieren einen reibungslosen und ununterbrochenen Ablauf von Langzeitexperimenten oder Anwendungen in der Industrie

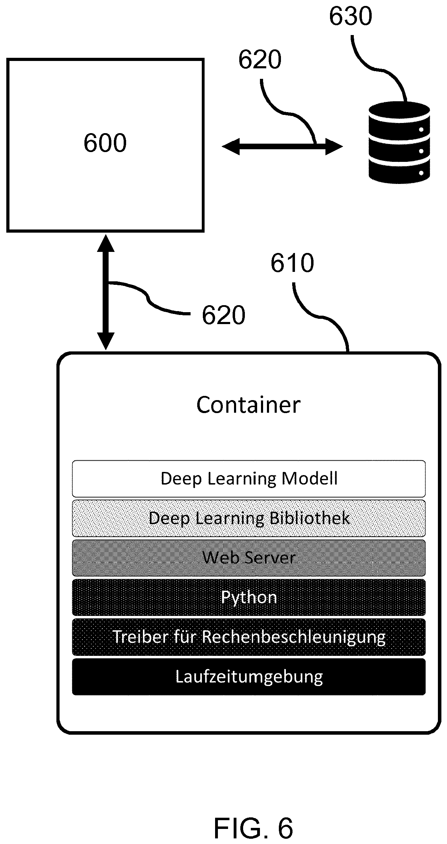

Die vom Modell-Manager oder Nutzer ausgewählten Modelle oder darauf basierenden Kl-Anwendungen können zur Laufzeit eines Experiments, davor oder danach schnell bereitgestellt werden. Sie können außerdem unabhängig von der Bildaquisesoftware versioniert und verwaltet werden, sowie auf unterschiedlichsten Systemen oder Systemkomponenten - vom Kleinstrechner über Embedded-Computer über Einzelplatzrechner bis hin zu Cloud - skalierbar sein. In einer bevorzugten Ausführungsform wird eine Container-Technik verwendet. Ein solcher Container (Figur 6, 610) enthält alle Umgebungsvariablen, den Namensraum und die Laufzeitumgebung und alle Bibliotheken, die für den Betrieb einer Anwendung oder eines Modells nötig sind, sowie das Modell oder die Anwendung selbst. Die Container sind in den folgenden Figuren nur beispielhaft und nicht beschränkend dargestellt. Beispielsweise können statt Python auch andere Programmiersprachen verwendet werden.

Figur 6 zeigt die Bereitstellung von Deep Learning-Modellen in Containern. Die Laufzeitumgebung, alle notwendigen Treiber und Bibliotheken sowie das Deep Learning Modell oder eine darauf basierende Anwendung kann in einem Container bereitgestellt werden. Die Bildaufnahmesoftware 600 kommuniziert mit diesem Container 610 über eine geeignete Schnittstelle, die die Anforderungen des Deep Learning-Bussystems erfüllt 620. Für den Anwendungsfall der Inferenz wird die Ein-/Ausgabe von Daten von der Bildaufnahmesoftware übernommen.

Die Bildaufnahmesoftware 600 kann eine Softwarekomponente sein, mittels der sich ein oder mehrere Mikroskope oder Mikroskopsysteme und/oder deren Komponenten steuern lassen. Außerdem kann die Bildaufnahmesoftware 600 eine Nutzerschnittstelle darstellen. Die grundlegende Verwaltung der erfassten Bilder, Experimentdaten, -metadaten und Trainingsergebnisse kann von der Bildaufnahmesoftware 600 übernommen werden.

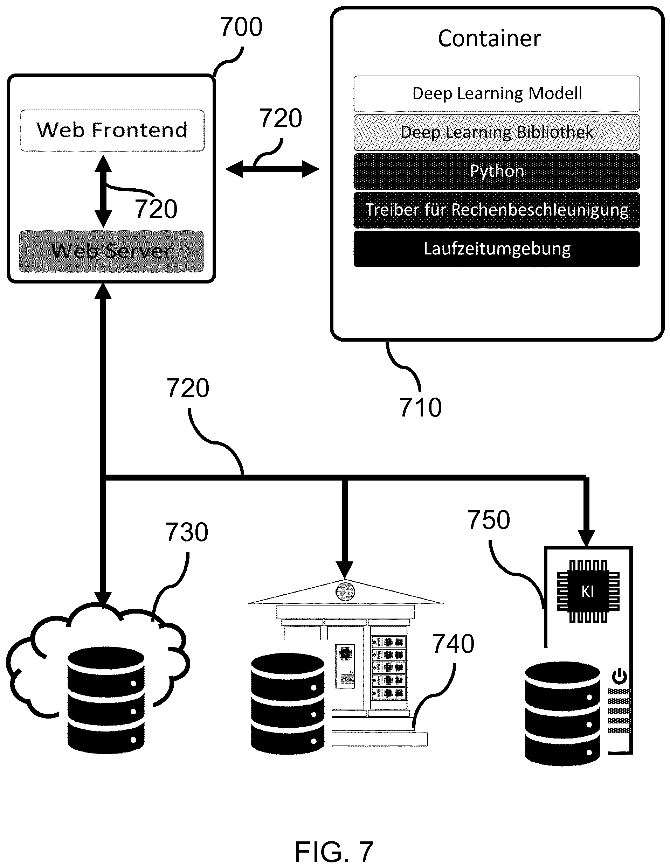

Figur 7 zeigt die Bereitstellung von Deep Learning Inferenz als Webservice. Ein Webserver und das zugehörige Frontend werden in einem Container 700 gestartet. Der Nutzer kommuniziert über das Frontend und schickt den Auftrag ab. Der Webserver ruft Daten und Modelle mit Hilfe des Modell-Managers von der Cloud 730, einem Forschungsinstitut 740 oder dem Einzelplatzrechner 750 des Nutzers ab. Über die Web-Schnittstelle des Deep Learning Bussystems 720 kommuniziert die Webapplikation mit einem Deep Learning-Container 710, der ein Anwenden von einem trainierten Modell (für die Inferenz) umfasst und ein Ergebnis an den Webserver zurückschickt. Dieser berechnet die Ausgabe und zeigt sie dem Nutzer über das Web Frontend an. Gegebenenfalls kann das Ergebnis auch gleich auf den Einzelplatzrechner oder das Mikroskop(-system) des Nutzers übertragen werden und dort den Fortgang eines Experiments beeinflussen oder Steueraufgaben übernehmen.

Der Einsatz von Containern ermöglicht die Skalierung von Kleinstrechnern, über Embedded Systeme, über Arbeitsplatzrechner mit GPUs, TPUs, auf ML- und/oder DL- spezialisierte ASICs oder FPGAs bis hin zu Cloud-Anwendungen ohne dass prinzipiell an den Modellen und der direkt assoziierten, zu deren Betrieb notwendigen Software irgendetwas verändert werden müsste.

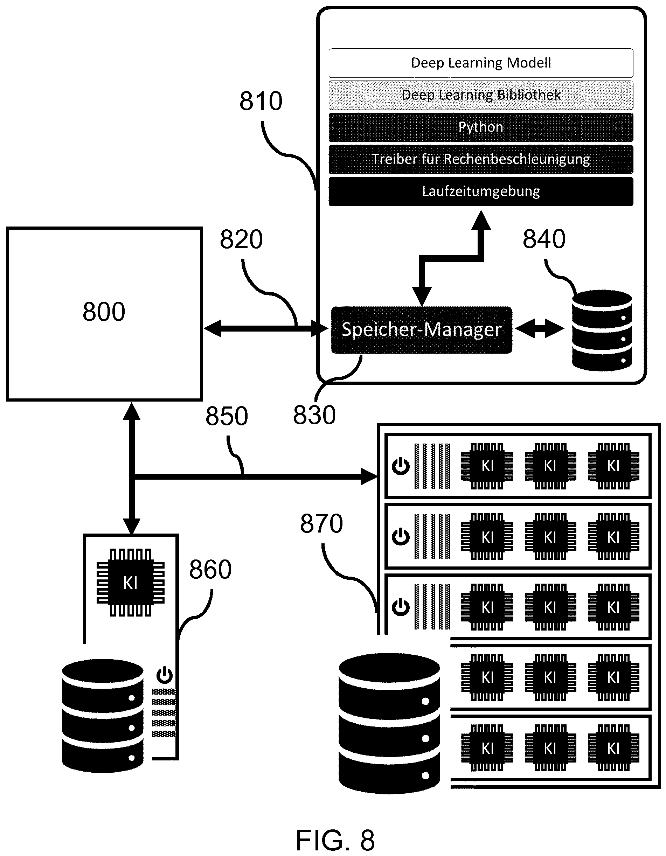

Figur 8 zeigt das Training von Modellen auf einem Einzelplatzrechner oder auf einem Server im lokalen Netzwerk. Die Bildaufnahmesoftware 800 ist mit dem Deep Learning-Container 810 über das Deep Learning-Bussystem 820 verbunden und bestimmt die Dimensionen der Ein- und/oder Ausgabedaten. Der Deep Learning-Container 810 läuft für das Training auf einer Computer-Ressource, auf der auch die Daten vorliegen. Weil für das Training maximale Speicherbandbreite benötigt wird, enthält der Deep Learning-Container auch einen Speicher-Manager 830, der bei Bedarf Daten auf einem schnellen lokalen Speicher 840 puffern und dem Deep Learning Modell Datenbatches zur Verfügung stellen kann. Das Speichern der Experimentdaten, -metadaten und Trainingsergebnisse übernimmt die Bildaufnahmesoftware 800 über das Deep Learning-Bussystem 850 auf einem Einzelplatzrechner 860 oder einem Server im Netz 870. Die Computer-Ressource, auf der der Deep Learning Container 810 läuft, kann mit 860 oder 870 identisch sein, um die Datenübertragungswege kurz zu halten. Die Aufnahmesoftware 800 kann auf der lokalen Workstation 860 ausgeführt werden.

Die Modelle können mit Deep Learning Methoden trainiert werden. Dies umfasst eine planmäßige Anwendung von mindestens einem Deep Learning Verfahren, vorzugsweise aber mehreren Deep Learning Verfahren zum Erreichen eines bestimmten Ziels. Das Ziel kann dabei die Analyse betreffen (z. B. Bildanalyse, Objekterkennung, Kontext-Erkennung etc.) oder aber die Steuerung betreffen (Feedback-Mikroskopie, Sensor-Adaption, Verfahrens-Adaption, System-Optimierung etc.). Deep Learning Verfahren können eine Folge von Verfahrensschritten umfassen, welche einen Ablauf in nachvollziehbare Schritte unterteilen, und zwar derart, dass dieser Ablauf wiederholbar wird. Bei den Verfahrensschritten kann es sich um bestimmte Deep Learning Algorithmen handeln. Es können aber auch Methoden sein, mit denen ein Netzwerk lernt (Backpropagation), es kann z. B. die Art der Datenerhebung sein oder die Art wie Daten über Hardware prozessiert werden etc.

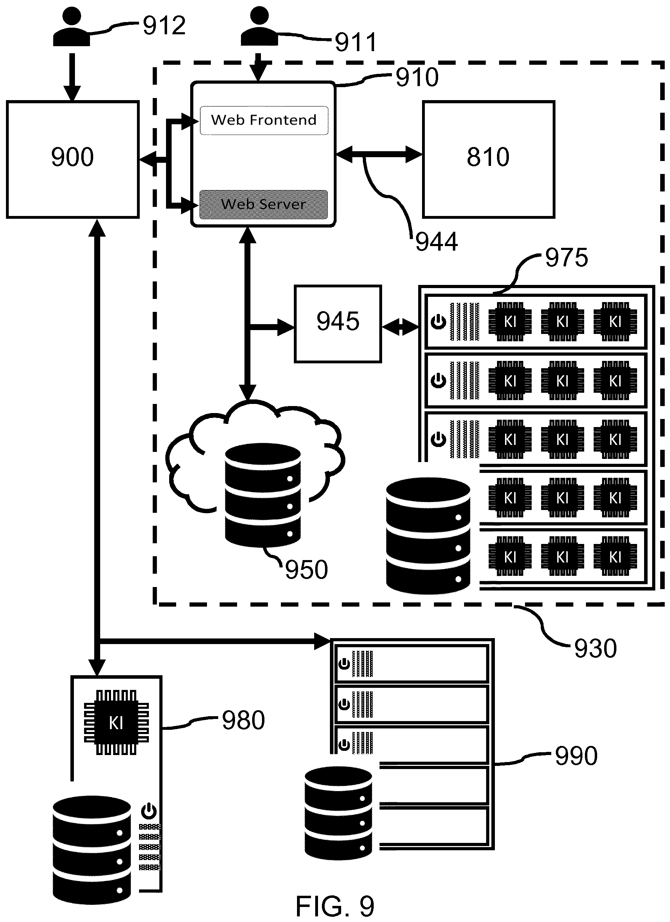

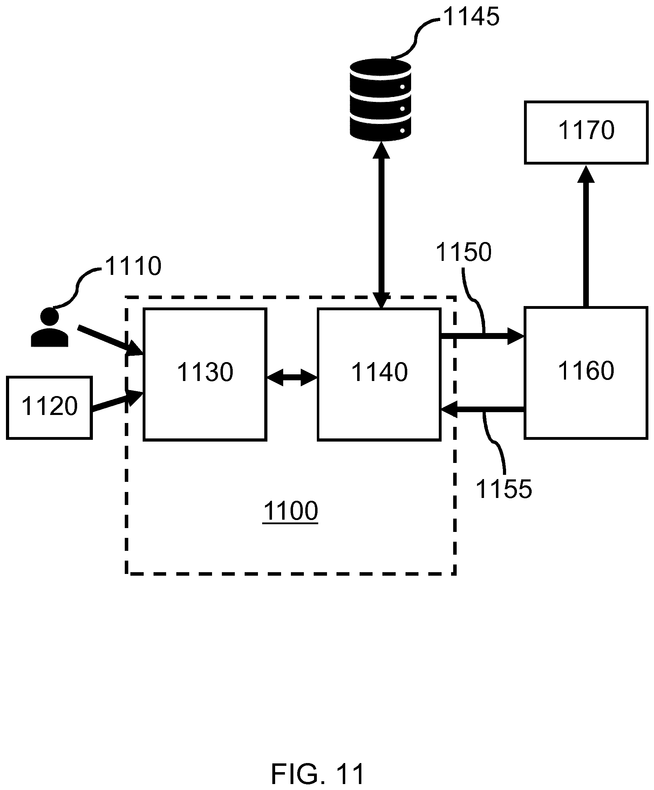

Figur 9 zeigt ein System für ein Training von Modellen als Webservice in der Cloud. Diese Form des Trainings unterstützt drei Arten von Anwendungsfällen. Im ersten Fall interagiert der Nutzer 911 mit einer Web-Applikation 910 in der Cloud 930, um Modelle für bestimmte Anwendungen zu trainieren. Dies geschieht in der Regel über den Modell-Store (Figur 11). Im zweiten und dritten Fall sitzt der Anwender an seiner Workstation und bedient die Bildaufnahmesoftware 900. Letztere kommuniziert mit einer Webapplikation 910 in der Cloud 930. Dies geschieht über das Deep Learning-Bussystem entweder interaktiv gesteuert durch den Nutzer, wiederum mittels eines Web-Frontends oder programmatisch gesteuert über eine API direkt mit dem Web-Server. Der Web-Server kann Daten in der Cloud zwischenspeichern oder zusätzliche Daten von einem Speicher 950 abfragen. Der Web-Server kümmert sich mit Hilfe des Modell-Managers 945 um die Bereitstellung von Rechenressourcen für das Training. Die für das Training benötigten Daten werden über das Deep Learning-Bussystem 944 an einen Deep Learning-Container 810 geschickt, der dem Deep Learning-Container 810 aus Figur 8 entsprechen kann. Dieser verwendet einen Speicher-Manager und einen schnellen lokalen Speicher zum Puffern der Daten für schnelles Training. Das Training erfolgt auf einer Rechenressource 975 mit großer Rechenleistung. Der schnelle lokale Speicher kann eine eigene Rechenressource darstellen oder Teil der Rechenressource 975 sein. Der Cloud-Service kann also auf der Rechenressource 975, um die Datenwege kurz zu halten, oder auf Rechenressourcen Dritter (zum Beispiel, wenn das Training als Dienstleistung über den Modell-Store angeboten wird) ausgeführt werden. Für den lokalen Speicher kann eine schnelle NVMe-SSD oder zukünftige Form von schnellem nichtflüchtigen Speicher verwendet werden. Die Ergebnisse des Trainings stehen der Bildaufnahmesoftware zur Verfügung, die sie lokal 980 oder auf einem Server 990 abspeichern kann und von dort auch weitere Daten nachladen kann. Die Aufnahmesoftware 900 wird in der Regel auf der lokalen Workstation 980 ausgeführt werden.

Zurück zum Anwendungsfall 1: Ein Anwender 911 kann Bedarf am Trainieren eines neuen Modells haben, aber nicht über eigene Ressourcen verfügen. Er kann dann die Web-Applikation 910 einer Cloud 930 verwenden, um mit Hilfe des Modell-Stores (Figur 11) nach fertigen Modellen oder Anbietern von Dienstleistungen und Rechenressourcen zu suchen. Der Web-Server benutzt den Modell-Manager 945, um passende fertige Modelle zu finden oder das Training neuer Modelle auf einer potenten Rechenressource 975 vorzunehmen. Der Anwender 911 würde in diesem Fall die Daten über ein Web-Interface hochladen und der Web-Server kann ggf. weitere benötigte Daten aus dem Web oder einer Cloud nachladen 950. Die Daten werden über einen Deep Learning-Bus 944 zu einem Deep Learning-Container 810 geschickt. Weil das Nachladen von Datenbatches für das Training schnell erfolgen muss, kann der Deep Learning-Container über einen schnellen Pufferspeicher verfügen, der von einem eigenen Speicher-Manager verwaltet wird (siehe hierzu auch Figur 8). Dies ist die logische Ebene. Auf Hardware-Seite kann der schnelle Pufferspeicher (z. B. schneller NVMe-SSD-Speicher) auch identisch sein mit der ausführenden Rechenressource 975, auf der auch der Deep Learning-Container laufen kann.

Anwendungsfall 2: Ein Anwender 912 sitzt an seinem Mikroskop und bedient die Aufnahmesoftware 900. Diese kann ihm anbieten, neue Modelle zu trainieren und dafür eine eigene Nutzerschnittstelle mitbringen oder ein Web-Frontend anbieten. Der Nutzer 912 kann somit interaktiv den Auftrag erteilen.

Anwendungsfall 3: Die Aufnahmesoftware 900 steuert das Training programmatisch. Das Training ist somit Teil des Experiments und kann dessen Verlauf beeinflussen. Dies ist zum Beispiel dann nötig, wenn ein vortrainiertes Modell mit neuen, bisher unbekannten Daten, feinjustiert werden soll, dies aber lokal nicht möglich oder nicht erwünscht ist, oder auch der Dienstanbieter oder ein Dritter ein passendes Modell hat und dieses Modell oder das Training neuer Modelle als Dienstleistung im Modell-Store zur Verfügung stellt. Dienstleistungen in diesem Sinne können die Bereitstellung von vortrainierten Modellen, einer Trainingsumgebung in einem vorkonfigurierten Container, Rechenressourcen, eine Erstellung neuer Modelle und deren Training, manuelle oder automatisierte Annotation vorhandener Daten oder eine Kombination daraus sein.

Figur 10 zeigt den schematischen Aufbau eines Modell-Managers 1000, der ausgestaltet ist um das richtige Modell für die richtige Anwendung und Maschine bereitzustellen. Über verschiedene Wege kommen Anfragen an den Modell-Manager, nämlich vom Nutzer über einen Web-Service 1010, als Ergebnis von Bildverarbeitung 1011, als Schritt im Prozessablauf eines Experiments 1012, als Ergebnis von Data-Mining auf Modell-Metadaten, versteckten Repräsentationen oder Modell-Parametern 1013, als Anfrage aus dem Modell-Store 1014, oder als explizite Modell-Parameter, zu denen experimentelle Bedingungen gehören 1015. Innerhalb des Modell-Managers findet eine Rechteverwaltung 1020 statt mit Hilfe von einer Modelldatenbank 1025. Dort können folgende Informationen gespeichert sein: Die Modell-Architektur (die Topologie des "neuronalen Netzes" mit allen Rechenschritten), Modell-Parameter (auf Englisch "model weights", also die gelernten Informationen), Modell-Metadaten und/oder Modell-Rechte. Ebenfalls innerhalb des Modell-Managers kann Container-Management 1030 stattfinden. Der Container-Manager ermöglicht die Bereitstellung ("Deployment") der Modelle in Containern (z. B. Docker-Containern). Dazu bedient sich der Container-Manager einer Container-Datenbank 1035, die die folgenden Informationen enthalten kann: Vorgefertigte Images, und Anleitung zum Erzeugen von Images. Anhand der Modell-Metadaten aus der Modell-Datenbank 1025 kann der Container-Manager das passende Container-Image auffinden oder ein neues erzeugen. Der Modell-Manager gibt das gewünschte Modell innerhalb eines Containers auf das entsprechende Zielsystem oder die entsprechende Vorrichtung aus. Dies kann ein Mikroskop / Mikroskopsystem 1050 sein ggf. mit Embedded-System oder attachierten Komponenten, ein Webservice 1051, der Modell-Store 1052 oder eine Rechenressource 1053. Bei letzterem kann es sich um Embedded-Systeme, Kleinstrechner, Mikroskop Workstations oder einen Server handeln.

Der Modell-Manager übernimmt alle Aufgaben, die dazu dienen, das richtige Modell für den richtigen Zweck auszuwählen, Metadaten zu Modellen zu verwalten, und Container für die Ausführung von Modellen zu erstellen. Außerdem kann die Rechteverwaltung der Modelle durch den Modell-Manager erfolgen. Da sich in der Datenbank eine beliebige Anzahl von Modellen befinden kann, sind vorteilhaft verschiedene Kriterien zur Suche und Auswahl des passenden Modells vorgesehen.

Für die verschiedenen Aufgaben des Modell-Managers sind eine Reihe von Metadaten rund um die Modelle vorgesehen. Tabelle 1 fasst einige beispielhafte Metadaten und ihren Zweck zusammen.

**Tabelle 1:**

| # | Metadatum | Zweck |
|---|---|---|
| 1 | Name des Modells | Identifikation durch den Nutzer |
| 2 | Modell-ID | Eindeutige Identifikationsnummer |
| 3 | Versionsnummer | Verwaltung verschiedener Modellversionen |
| 4 | Bibliothek zur Rechenbeschleunigung. | Auswahl oder Erstellung eines geeigneten Containers für die Ausführung des Modells |
| 5 | Benötigte Software-Bibliotheken | Auswahl oder Erstellung eines geeigneten Containers bzw. einer Laufzeitumgebung für die Ausführung des Modells |
| 6 | Schnittstelle für das Modell | Auswahl oder Erstellung eines geeigneten Containers und Kommunikation mit Bildaufnahmesoftware |
| 7 | Speicherbedarf RAM/VRAM | Auswahl der geeigneten Hardware für die Ausführung des Modelles (z. B. CPU, GPU, TPU, auf ML- und/oder DL- spezialisierte ASIC, FPGA, embedded Rechner, Workstation, Cloud) |
| 8 | Position im Arbeitsablauf | Bestimmung der passenden Hardware oder Position im Arbeitsablauf für den Anwender für die Ausführung des Modells |
| 9 | Modellkategorie | Auswahl des geeigneten Modells für die Problemstellung |
| 10 | Metrik über Leistungsfähigkeit je Anwendung | Auswahl des geeigneten Modells für die Problemstellung, kontinuierliche Verbesserung des Modells |
| 11 | Explizite Modellmerkmale | Metadaten aus dem Experiment und der Bildaufnahme zur Auswahl des passenden Modells für die Problemstellung |
| 12 | Implizite Modellmerkmale | Extrahierte Merkmale bzw. vorberechnete Aktivierungen zur problemsemantischen Auswahl eines passenden Modells. |
| 13 | Autor | Rechteverwaltung |
| 14 | Bezahlmodell | Rechteverwaltung Abrechnung und Bezahlung der Nutzung |
| 15 | Zertifizierung oder Norm | Rechteverwaltung, welche Maschine das Modell ausführen darf |

Die Ausführung der Modelle kann so erfolgen, dass sie sich flexibel in verschiedene Umgebungen integrieren lassen, wie Einzelplatzrechner, Embedded Computer, FPGA, TPU oder ASIC auf einer attachierten Mikroskopkomponente oder der Cloud, ohne dass man die Umgebung stark ändern muss. Die Laufzeitumgebung für jedes Modell kann individuell anpassbar und versionierbar sein, weil sich die Technologie im Bereich Deep Learning schnell weiterentwickelt. Daher wird in Ausführungsformen eine Container-Technik verwendet. Hiermit lassen sich alle Software-Bibliotheken, Umgebungsvariablen und "Namespaces" zusammen mit dem Modell verwalten und bereitstellen. Der Modell-Manager erkennt anhand der Metadaten, welcher vorgefertigte Container verwendet werden kann oder erstellt dynamisch einen neuen geeigneten Container und verwaltet diesen. Die Bibliothek zur Rechenbeschleunigung, Tabelle 1 Feld (4) speichert, welche Version z. B. von CU-DA oder OpenCL benötigt wird. Weitere Bibliotheken, wie beispielsweise eine Python-Version (oder eine Version einer anderen Programmiersprache) und -distribution, Tensorflow, Pytorch und weitere können im Feld (5) der Tabelle 1 gespeichert werden. Im Feld (6) der Tabelle 1 wird die genaue Dimensionalität der Tensoren am Ein- und Ausgang des Modells sowie deren Datentyp gespeichert. Dies dient dazu, die Schnittstelle des Containers und der Datenaufnahmesoftware zu konfigurieren und das richtige Modell auszuwählen. Im Falle von Transfer-Learning kann auf diese Weise auch ein Teil eines vortrainierten Modells in einem neuen Anwendungskontext wiederverwendet und mit anderen Modellteilen kombiniert werden. Das Modell kann auf verschiedener Hardware und an verschiedenen Positionen im Arbeitsablauf des Mikroskops oder Nutzers ausgeführt werden, z. B. in Echtzeit während der Aufnahme, asynchron während der Aufnahme für Feedback-Mikroskopie oder im Post-Processing. Dazu dienen die Felder (7) und (8). Anhand des Speicherbedarfs und der Position im Arbeitsablauf wird bestimmt, auf welcher Komponente des Mikroskopsystems das Modell ausgeführt werden kann und/oder muss, z. B. auf einem FPGA in einem Punktscanner, einer Kamera, einem Stativ oder auf der CPU bzw. GPU, TPU oder ASIC einer Workstation oder auf einem Rechencluster oder in der Cloud. Die Felder (9) bis (12) in Tabelle 1 dienen dazu, zu einer gegebenen Problemstellung das passende Modell auszuwählen. Dazu wird gemäß Feld (9) eine Modellkategorie oder die Datendomäne bestimmt, wie z. B. ob es sich um ein Modell handelt, das Bilder oder Text erkennt, oder ob es ein Klassifizierungs- oder Regressionsproblem löst. Metriken über die Leistungsfähigkeit (wie Vorhersagegenauigkeit, "precision", "recall", "F1-Score", "dice loss", "SSIM" und andere) werden in Feld (10) erfasst. Anhand derer kann nicht nur das passende Modell ausgewählt werden, sondern auch vorhandene Modelle kontinuierlich verbessert werden.

Die Gesamtheit aller geeigneten Modelle in der Datenbank des Modell-Managers verhält sich demnach wie ein "Super-Modell" das als Ganzes lernt, immer besser und differenzierter spezifische Aufgabenstellungen zu lösen. Durch den beständigen Austausch von Modellen, die anhand von Nutzerdaten immer weiter verfeinert werden, mit verschiedenen Daten von Nutzern und Nutzergruppen weltweit, findet ein globaler Lernprozess auf allen Nutzerdaten der geeigneten Datendomäne statt, der das Angebot von Modellen beständig verbessert. Dies ist einer der Vorteile gegenüber einfachen und isolierten Anwendungen von neuronalen Netzen auf einem einzigen Nutzersystem.

Explizite Modellmerkmale werden in Feld (11) der Tabelle 1 gespeichert. Es handelt sich dabei um Metadaten aus dem Experiment, wie Färbungen, Zelllinien, experimentelle Protokolle, biologische DNA - oder Proteinsequenzen, Aufnahmegeschwindigkeit, Temperatur, Luftfeuchte, CO2-Gehalt des Puffers, Nährlösung, Beleuchtung, Detektionsparameter u.v.a.m. Eine weitere Möglichkeit zur Auswahl geeigneter Modelle sind die impliziten Modellmerkmale im Feld (12). Dabei handelt es sich um vorberechnete Aktivierungen des neuronalen Netzes anhand von Beispieldatensätzen oder auch um gelernte Modellparameter, die die gelernte Semantik des Modells wiederspiegeln. Durch geeignete nicht-überwachte ("unsupervised") Lernmethoden, wie "kmeans clustering", "mean shift clustering" oder "t-SNE" können semantische Verwandtschaften zwischen Modellen ohne Zutun des Nutzers erkannt werden. Somit ist es auch möglich, dem Nutzer bisher unbekannte Modelle zu finden und dem Nutzer vorzuschlagen. In den Feldern (13) bis (15) von Tabelle 1 geht es um die Rechteverwaltung der Modelle. Autoren, Feld (13), können Modelle gratis oder gegen Bezahlung zur Verfügung stellen. Dazu können unterschiedliche Bezahlmodelle, gespeichert in Feld (14), verwendet werden, z. B. einmalige Bezahlung beim Download oder nutzungsabhängige Bezahlung bezogen auf die Dauer oder Häufigkeit der Nutzung. Im Feld (15) wird verwaltet, welche Maschine das betreffende Modell ausführen darf. In bestimmten Anwendungsfeldern, z. B. der Medizin, der Pathologie oder im Bereich In Vitro Diagnostik, müssen bestimmte Standards, Abnahmekriterien oder Zertifizierungen eingehalten werden. Daher muss die Ausführung oder das Nachladen von Modellen in solchen Bereichen streng reglementiert sein. Dagegen können Geräte, die der reinen Forschung dienen, beliebige Modelle ausführen oder nachladen.

Auf all den genannten Metadaten kann eine Suche mit verschiedenen Suchbegriffen, regulären Ausdrücken und Filtern stattfinden. Ebenso kann auf diesen Metadaten Data Mining stattfinden, um die Modelle zu verwalten, auszuwählen und kontinuierlich zu verbessern.

Figur 11 zeigt schematisch einen Modell-Store 1100. Der Modell-Store 1100 ist der Marktplatz für Modelle und Dienstleistungen im Bereich "Bioimage informatics". Anwender 1110 des Mikroskops oder Web-Services suchen nach Modellen, fragen Dienstleistungen an (wie die Erstellung von Modellen oder Bildverarbeitungsprozessen), die sie mit Geld oder einem Punktesystem bezahlen. Die Suche erfolgt über ein Webfrontend 1130. Dort bieten auch Experten 1120 im Bereich Bildverarbeitung oder Mikroskopie ihre Modelle und Dienstleistungen an. Die Dienstleistung kann neben der Erstellung von Modellen und Bildverarbeitungsprozessen auch die Bereitstellung von eigenen Rechenressourcen beinhalten. Der Webfrontend wickelt Zahlungsinformationen, Nutzerpunkte ("Credits") und Nutzerstufen ("Tiers") über ein Shop-Backend 1140 ab. Zur Auffindung der geeigneten Geschäftspartner enthält das Shop-Backend einen Matchmaking-Service. Die benötigten Informationen bezüglich Nutzerprofilen, -credits, -tiers und -exposè speichert das Shop-Backend in einer Nutzerdatenbank 1145. Suchanfragen von Anwendern wickelt der Modell-Store über den Modell-Manager 1160 im Schritt 1150 ab und erhält passende Modelle im Schritt 1155 zurück. Umgekehrt werden von Experten angebotene Modelle vom Modell-Manager 1160 verwaltet. Werden zum Erfüllen von Dienstleistungen Rechenressourcen 1170 benötigt, kann ein Hersteller diese bereitstellen oder von Experten 1120 oder Dritten bereitgestellte Ressourcen 1170 zur Verfügung stellen und die gewünschten Modelle oder Bildverarbeitungsprozesse dort bereitstellen. Der Anwender kann nun neue Modelle auf sein Mikroskop herunterladen und dort ausführen, er kann beispielsweise einen Bildverarbeitungsprozess herunterladen und ausführen oder er kann diesen auf einem vom Hersteller oder Dritten bereit gestellten Cloud-Service ausführen.

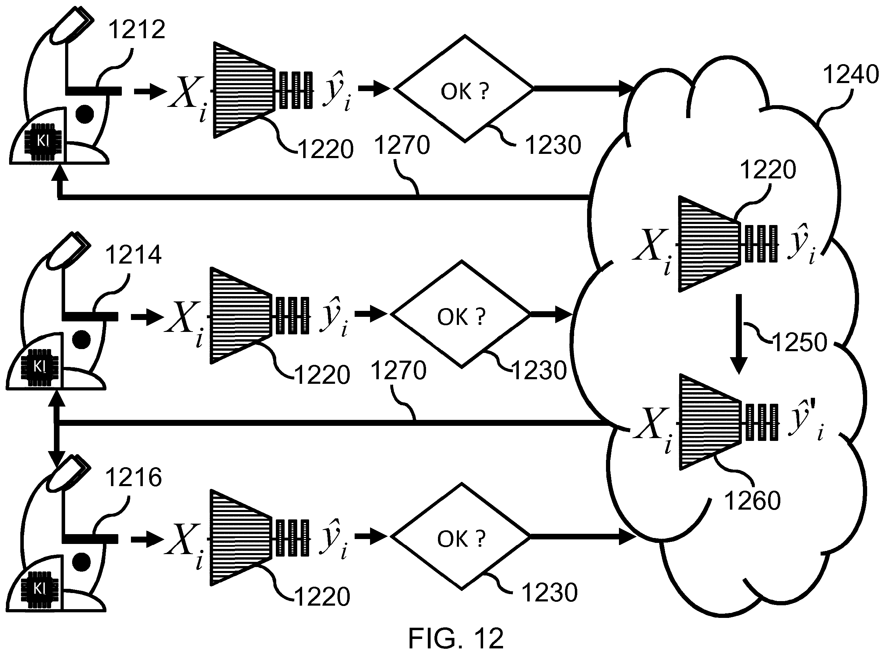

Figur 12 zeigt eine schematische Darstellung einer Ausführungsform des erfindungsgemäßen Verfahrens zur Optimierung eines Arbeitsablaufes. Messsysteme 1212, 1214 und 1216 umfassen jeweils mindestens eine Vorrichtung auf der ein trainiertes Modell 1220 ausgeführt wird. Die mindestens eine Vorrichtung kann einen Arbeitsplatzrechner, einen Embedded-Computer, einen Sensor, einen Aktor und/oder ein Mikroskop umfassen. Das Messsystem selbst kann neben der mindestens einen Vorrichtung und ein oder mehreren Mikroskopen und/oder Mikroskopsystemen weitere Geräte umfassen, die an der Durchführung einer Messung beteiligt sind. Dies kann beispielsweise Geräte zur Laborautomation, ein oder mehrere Sensoren, ein oder mehrere Aktoren, ein oder mehrere Probenpräparationsgeräte, ein oder mehrere Mikrotome, ein oder mehrere Geräte zum Pipettieren von Flüssigkeiten und/oder eine Klimakammer umfassen, die über ein Netzwerk, z. B. ein Funknetz, miteinander verbunden sind. Die Messsysteme 1212, 1214 und 1216 können ferner räumlich getrennt sein und von unterschiedlichen Nutzern bedient werden.

In jedem Messsystem 1212, 1214 und 1216 kann das gleiche trainierte Modell 1220 angewendet werden. Das trainierte Model 1220 liefert zu einer Eingabe Xᵢ in das trainierte Modell 1220 eine Ausgabe ŷᵢ. Das trainierte Modell kann auf erfasste Daten angewendet werden, die durch ein oder mehrere Komponenten, beispielsweise einem Sensor wie einer Kamera, der ein oder mehreren Mikroskope während eines Arbeitsablaufes erfasst wurden. Die erfassten Daten können als Eingabe Xᵢ für das Modell dienen und Bilddaten, Metadaten, Parameterdaten, Daten zum Ablauf des Experiments, Informationen zu Reagenzien und Materialien, Informationen zu einem untersuchten Objekt oder einer untersuchten Probe, anwenderbezogene Daten, und/oder Gerätedaten von Geräten, die im Verlauf einer durch die ein oder mehreren Mikroskope und/oder Mikroskopsysteme durchgeführten Messung gesteuert werden umfassen. Basierend auf der Ausgabe ŷᵢ des trainierten Modells kann mindestens eine Entscheidung den Arbeitsablauf der ein oder mehreren Mikroskope oder der Messsysteme 1212, 1214 und 1216 betreffend getroffen werden. Die mindestens eine Entscheidung kann eine automatische oder halbautomatische Zustandsänderung der ein oder mehreren Mikroskope oder deren Komponenten umfassen. Beispielsweise kann die Ausgabe ŷᵢ zur Steuerung der ein oder mehreren Komponenten genutzt werden oder basierend auf der Ausgabe ŷᵢ ein weiteres trainiertes Modell auswählen und zur Anwendung bringen. Alternativ können durch die Ausgabe ŷᵢ auch Fehler angezeigt werden oder Parameterdaten von an der Messung beteiligten Geräten geändert werden.

Die Ausgabe ŷᵢ wird in Schritt 1230 bewertet. Die Bewertung kann auf einem Erfassen einer Eingabe durch einen Nutzer des Messsystems 1212 basieren und eine negative oder eine positive Bewertung umfassen. In einem Beispiel erfasst eine Kamera eines Mikroskops des Messsystems 1212 ein Bild. Das erfasste Bild wird mittels des trainierten Modells 1220 analysiert. Die Pixel des erfassten Bildes können dem Eingabewert Xᵢ für das trainierte Modell 1220 entsprechen. Das trainierte Modell 1220 kann in diesem Beispiel zur Bestimmung der optimalen Beleuchtung einer Probe trainiert worden sein und liefert angewendet auf das erfasste Bild eine Vorhersage oder Ausgabe ŷᵢ für die Intensität einer Lichtquelle. In einem weiteren Schritt kann die Intensität der Lichtquelle automatisch eingestellt werden und eine weitere Messung mit der neuen Intensität durchgeführt werden. Die Bewertung der Vorhersage oder Ausgabe durch den Nutzer kann aktiv oder passiv geschehen. Beispielsweise kann der Nutzer die vorhergesagte Intensität überschreiben. Das System erfasst die Nutzereingabe und bewertet die Vorhersage oder Ausgabe negativ, da angenommen wird, dass der Nutzer mit der vorhergesagten Intensität nicht zufrieden war. Dementsprechend kann ein Ausbleiben einer Nutzereingabe als positive Bewertung gewertet werden. In einem Ausführungsbeispiel kann der Nutzer aktiv nach einer Bewertung der Vorhersage gefragt werden. Die erfassten Daten können in Abhängigkeit der Bewertung annotiert werden und als Trainingsdaten genutzt werden.

In einem nächsten Schritt werden zweite Daten an die Cloud 1240 gesendet. Die zweiten Daten können automatisch, halbautomatisch oder manuell zu der Cloud 1240 hochgeladen werden und mindestens eines der folgenden umfassen: das mindestens eine trainierte Modell 1220 oder Teile davon, erfasste Daten, die Eingabedaten für das mindestens eine trainierte Modell umfassen, Annotationen über einen Soll-Ausgabewert des mindestens einen trainierten Modells angewendet auf die Eingabedaten, versteckte Repräsentationen von Daten, Bewertungen von Ausgabewerten des mindestens einen trainierten Modells, Parameterdaten mindestens einer der ein oder mehreren Komponenten, Nutzereingaben, Daten zum Ablauf eines Experiments, Fehlermeldungen, Informationen zu Reagenzien und Materialien, Gerätedaten von Geräten, die im Verlauf einer durch die ein oder mehreren Mikroskope und/oder Mikroskopsysteme durchgeführten Messung gesteuert werden, und anwenderbezogene Daten. Die zweiten Daten können von ein oder mehreren Quellen kommen. In Figur 12 sind beispielsweise drei Quellen (Messsysteme 1212, 1214 und 1216) gezeigt. In einem Ausführungsbeispiel werden die zweiten Daten in der Cloud 1240 aggregiert.

In der Cloud 1240 wird in einem Schritt 1250 das trainierte Modell 1220 modifiziert oder adaptiert, um das adaptierte Modell 1260 zu erhalten. Schritt 1250 kann ein Trainieren mindestens eines Teils des trainierten Modells 1220 zumindest teilweise mittels der zweiten Daten umfassen um das adaptierte trainierte Modell 1260 zu erhalten. Alternativ kann auch ein neues Modell mittels der aggregierten Daten in der Cloud 1240 trainiert werden. Das adaptierte trainierte Modell 1260 liefert zu einer Eingabe Xᵢ in das adaptierte trainierte Modell 1260 eine Ausgabe ŷ'ᵢ. Für die gleiche Eingabe Xᵢ in das trainierte Modell 1220 und das adaptierte trainierte Modell 1260 können daher unterschiedliche Ausgaben ŷᵢ und ŷᵢ erhalten werden. Somit kann das adaptierte trainierte Modell 1260 auf Basis einer Eingabe Xi andere Vorhersagen für einen Arbeitsablauf treffen als das trainierte Modell 1220. In einer Ausführungsform sind die Vorhersagen oder Ausgaben ŷ'ᵢ des adaptierten trainierten Modells 1260 vorteilhaft für einen bestimmten oder speziellen Anwendungsfall. Beispielsweise kann durch das Adaptieren eine Vorhersagegenauigkeit des mindestens einen trainierten Modells, angewendet auf die erfassten Daten, erhöht werden. Durch bessere Vorhersagen oder optimierte Ausgaben eines adaptierten trainierten Modells kann ein Arbeitsablauf eines Mikroskops oder Mikroskopsystems optimiert werden.

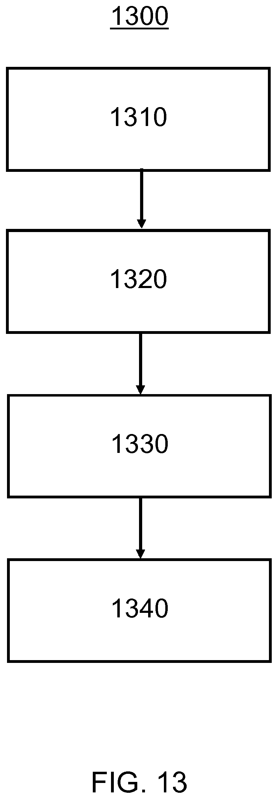

In einem weiteren Schritt 1270 kann das adaptierte trainierte Modell 1260 oder das neue trainierte Modell auf die ein oder mehreren Vorrichtungen der Messsysteme 1212, 1214 und 1216 geladen werden. Dies kann automatisch, halbautomatisch oder manuell geschehen. Somit können trainierte Modelle kontinuierlich verbessert werden und der Arbeitsablauf von Mikroskopen oder Mikroskopsystemen verbessert werden. Figur 13 zeigt ein schematisches Flussdiagramm nach einem Ausführungsbeispiel eines erfindungsgemäßen Verfahrens 1300 zur Optimierung eines Arbeitsablaufes mindestens eines Mikroskops oder Mikroskopsystems. Das Verfahren 1300 umfasst einen Schritt 1310, in welchem Daten während eines Arbeitsablaufes, der durch ein oder mehrere Komponenten mindestens eines Mikroskops und/oder Mikroskopsystems ausgeführt wird, erfasst werden. Die Daten können durch eine oder mehrere der ein oder mehreren Komponenten erfasst werden, wie z. B. einem Sensor.

In einem optionalen Schritt 1320 können zumindest teilweise auf Basis der erfassten Daten ein oder mehrere trainierte Modelle bestimmt werden. Das Bestimmen der ein oder mehreren trainierten Modelle kann ein Anwenden eines trainierten Mastermodells auf die erfassten Daten umfassen. Die ein oder mehreren trainierten Modelle können aus einer Vielzahl von trainierten Modellen ausgewählt werden, die lokal gespeichert und aus einer lokalen Datenbank abgerufen werden können.

In einem weiteren Schritt 1330 werden ein oder mehrere trainierte Modelle, die in einer Ausführungsform vorher bestimmt wurden, auf die erfassten Daten angewendet. Die Anwendung kann während der Ausführung des Arbeitsablaufes geschehen. Das Anwenden der ein oder mehreren trainierten Modelle kann eine Analyse der Daten mittels der ein oder mehreren trainierten Modelle umfassen, auf deren Grundlage mindestens eine Entscheidung den Arbeitsablauf betreffend getroffen werden kann. Die ein oder mehreren trainierten Modelle können als Web-Service, auf einem Arbeitsplatzrechner, auf einem Mikroskop oder Mikroskopsystem und/oder auf attachierten Komponenten des Mikroskops oder Mikroskopsystems angewendet werden.

In einem weiteren Schritt 1340 wird mindestens eine Entscheidung den Arbeitsablauf betreffend basierend auf dem Anwenden der ein oder mehreren trainierten Modelle getroffen. Dies kann eine Steuerung mindestens einer der ein oder mehreren Komponenten umfassen.

In einer Ausführungsform, können die ein oder mehreren trainierten Modelle oder das trainierte Mastermodell adaptiert werden. Hierfür können die ein oder mehreren trainierten Modelle oder das trainierte Mastermodell mittels künstlicher Intelligenz auf einem Server, einer Cloud oder einem Arbeitsplatzrechner trainiert werden. Der Server, die Cloud oder der Arbeitsplatzrechner sind derart ausgestaltet, dass sie mittels Deep Learning Modelle trainieren können. Dies kann anhand von aggregierten Daten aus verschiedenen Quellen geschehen. Allerdings können auch nur Teile der ein oder mehreren trainierten Modelle oder des trainierten Mastermodells trainiert werden. Da dieses Verfahren des Trainierens (auch Feinjustage genannt) weniger rechenintensiv ist kann das Adaptieren eines Teils der ein oder mehreren trainierten Modelle oder des trainierten Mastermodells sowohl auf einem Server, einer Cloud oder einem Arbeitsplatzrechner, als auch auf Kleinstrechnern die Teil eines Mikroskops sind, Embedded-Computern, oder anderen Vorrichtungen in einem Mikroskopsystem, durchgeführt werden. Auch für die Feinjustage können Daten von verschiedenen Quellen verwendet werden.

Der Einsatz prädiktiver / trainierter Modelle, die in den Messungen von Mikroskopen eingesetzt werden und dort Vorhersagen machen (Inferenz), vorteilhaft auf Basis von wenigen Daten, optimiert Arbeitsabläufe und erweitert den Anwendungsbereich von Modellen in Mikroskopmessungen. Anwendungsbereiche der Inferenz durch diese Modelle sind vielfältig und umfassen unter anderem die Automatisierung von Mikroskopen oder von experimentellen Abläufen, ganz oder teilweise (z. B. Finden von Objekten, Einstellung von Beleuchtungs- oder Detektionsparameter), Rekonstruktion von Bildern und Entfernen von Bildfehlern (z. B. Entrauschen), Data Mining in Daten (z. B. Segmentierung von einzelnen Objekten, Erkennung von Phänotypen), Selbstdiagnose von Mikroskopen, Koordinierung von Service-Einsätzen, Qualitätskontrolle und Reproduzierbarkeit von Experimenten und eine Verbesserung der Nutzerfreundlichkeit. Durch Feinjustage der prädiktiven Modelle können diese beständig verbessert und/oder der Anwendungsbereich der Modelle spezifiziert werden. Dies kann vorteilhaft durch Training nur weniger Knoten in einem neuronalen Netzwerk geschehen.

### Bezugszeichen:

- 100: Vorrichtung
- 110: ein oder mehrere Prozessoren
- 120: ein oder mehrere Speichermedien
- 130: trainiertes Modell
- 210: Mikroskop
- 220: Embedded-Computer
- 230: Systemrechner
- 240, 250: bidirektionale Kommunikationsverbindungen
- 260: Aktor
- 270: Sensor
- 330a, 330b, 330c, 350b: Mikroskope
- 350a, 350c: Mikroskopsysteme
- 400: Mastermodell
- 410, 412, 414, 416: Datendomänen
- 420, 430, 440: trainierte Modelle
- 500: Mikroskop / Mikroskopsystem
- 510, 520: Daten
- 530: trainiertes Modell
- 540, 550: Verfahrensschritt
- 600: Bildaufnahmesoftware
- 610: Container
- 620: Deep Learning-Bussystem
- 630: Netzwerk- oder Cloudspeicher
- 700: Container
- 710: Deep Learning-Container
- 720: Deep Learning-Bussystem
- 730: Cloud
- 740: Forschungsinstitut
- 750: Einzelplatzrechner des Nutzers
- 800: Bildaufnahmesoftware
- 810: Deep Learning-Container
- 820: Deep Learning-Bussystem
- 830: Speicher-Manager
- 840: schneller lokaler Speicher
- 850: Deep Learning-Bussystem
- 860: Einzelplatzrechner
- 870: Server im Netzwerk
- 910: Web-Applikation
- 911,912: Nutzer
- 930: Cloud
- 944: Deep Learning-Bussystem
- 945: Modell-Manager
- 950: Speicher
- 975: Rechenressource mit großer Rechenleistung
- 980: Systemrechner
- 990: Server
- 1000: Modell-Manager
- 1010 - 1015: Verfahrensschritte
- 1020: Rechteverwaltung
- 1025: Modelldatenbank
- 1014: Modell-Store
- 1030: Container-Management
- 1035: Container-Datenbank
- 1050: Mikroskop
- 1051: Webservice
- 1052: Modell-Store
- 1053: Rechenressource
- 1100: Modell-Store
- 1110: Anwender
- 1130: Web Frontend
- 1120: Experten
- 1140: Shop-Backend
- 1145: Nutzerdatenbank
- 1150, 1155: Verfahrensschritte
- 1160: Modell-Manager
- 1170: Rechenressource
- 1212 - 1216: Messsysteme
- 1220: trainiertes Modell
- 1230: Bewertung
- 1240: Cloud
- 1250: Verfahrensschritt
- 1260: adaptiertes trainiertes Modell
- 1270: Verfahrensschritt
- 1300: Verfahren
- 1310 - 1340: Verfahrensschritte

## Patentansprüche

1. Vorrichtung (100) zur Optimierung von Arbeitsabläufen eines oder mehrerer Mikroskope und/oder Mikroskopsysteme (210; 330, 350; 500; 1050; 1212, 1214, 1216), umfassend:
ein oder mehrere Prozessoren (110);
ein oder mehrere computerlesbare Speichermedien (120), auf denen computerausführbare Anweisungen gespeichert sind, die, wenn sie von dem einen oder den mehreren Prozessoren (110) ausgeführt werden, bewirken, dass
a) ein oder mehrere Komponenten (260, 270) eines oder mehrerer Mikroskope und/oder Mikroskopsysteme (210; 330, 350; 500; 1050; 1212, 1214, 1216) einen Arbeitsablauf ausführen,
wobei der Arbeitsablauf ein Erfassen von ersten Daten (510, 520) während einer laufenden Messung umfasst, wobei die erfassten ersten Daten (510, 520) Bilddaten umfassen;
b) ein oder mehrere trainierte Modelle (420, 430, 440; 530; 1220) zur Bildanalyse auf die erfassten ersten Daten (510, 520) angewendet werden; und
c) mindestens eine Entscheidung den Arbeitsablauf betreffend basierend auf dem Anwenden der ein oder mehreren trainierten Modelle (420, 430, 440; 530; 1220) getroffen wird,
**dadurch gekennzeichnet, dass**
die ganze Messung wiederholt wird oder Teile der Messung wiederholt werden, wenn Schwankungen einer Laserleistung, Schwankungen einer Verstärkungsspannung von Sensoren oder Schwankungen einer Temperatur von Klimakammern durch die ein oder mehreren trainierten Modelle (420, 430, 440; 530; 1220) automatisch erkannt werden.

2. Vorrichtung nach Anspruch 1, **gekennzeichnet dadurch, dass** die computerausführbaren Anweisungen, wenn sie von dem einen oder den mehreren Prozessoren (110) ausgeführt werden, des Weiteren bewirken, dass die ein oder mehreren trainierten Modelle (420, 430, 440; 530; 1220) zumindest teilweise auf Basis der erfassten ersten Daten (510, 520) bestimmt werden.

3. Vorrichtung nach Anspruch 2, **gekennzeichnet dadurch, dass** das Bestimmen der ein oder mehreren trainierten Modelle (420, 430, 440; 530; 1220) zumindest teilweise auf dem Anwenden eines trainierten Mastermodells (400) auf die erfassten ersten Daten (510, 520) basiert.

4. Vorrichtung nach Anspruch 3, **gekennzeichnet dadurch, dass** das Anwenden des trainierten Mastermodells (400) eine Analyse der erfassten ersten Daten (510, 520) umfasst, wobei das trainierte Mastermodell (400) basierend auf Informationen aus der Analyse der erfassten ersten Daten (510, 520) die ein oder mehreren trainierten Modelle (420, 430, 440; 530; 1220) bestimmt.

5. Vorrichtung nach einem der Ansprüche 1 bis 4, **gekennzeichnet dadurch, dass** die erfassten ersten Daten (510, 520) mindestens eines der folgenden umfassen: Nutzereingaben; Fehlermeldungen; Metadaten; Parameterdaten der ein oder mehreren Komponenten; Daten zum Ablauf des Experiments; Informationen zu Reagenzien und Materialien; Informationen zu einem Objekt oder einer Probe; anwenderbezogene Daten; und Gerätedaten von Geräten, die im Verlauf einer durch die ein oder mehreren Mikroskope und/oder Mikroskopsysteme (210; 330, 350; 500; 1050; 1212, 1214, 1216) und/oder durch attachierte Komponenten der ein oder mehreren Mikroskope und/oder Mikroskopsysteme (210; 330, 350; 500; 1050; 1212, 1214, 1216) durchgeführten Messung gesteuert werden, und/oder
eine Selbstdiagnose von dem einen Mikroskop oder der mehreren Mikroskope und/oder des Mikroskopsystems (210; 330, 350; 500; 1050; 1212, 1214, 1216) basierend auf aufgezeichneten Zustandsparametern von Modulen oder Komponenten des einen Mikroskops oder der mehreren Mikroskope und/oder des Mikroskopsystems (210; 330, 350; 500; 1050; 1212, 1214, 1216) durchgeführt wird, und/oder
für alle sensorisch oder logisch erfassten Geräteparameter Normbereiche im Sinne von Intervallen mit Schwellwerten definiert sind, und bei Verlassen des Intervalls kann das Mikroskop oder die mehreren Mikroskope und/oder das Mikroskopsystems (210; 330, 350; 500; 1050; 1212, 1214, 1216) selbsttätig ein Event auslöst, oder ein trainiertes Modell unüberwacht nach Anomalien in Datenströmen sucht und beim Auftreten von Anomalien entsprechende Events auslöst, wobei die Events über ein Netzwerk zu einer Steuersoftware anderer Mikroskope, zur Nutzerschnittstelle eines Anwenders, oder auf ein Mobilgerät eines Service-Technikers verschickt wird.

6. Vorrichtung nach einem der Ansprüche 1 bis 5, **gekennzeichnet dadurch, dass** die Vorrichtung ausgestaltet ist mindestens eines der ein oder mehreren trainierten Modelle (420, 430, 440; 530; 1220) zu adaptieren.

7. Vorrichtung nach Anspruch 6, **gekennzeichnet dadurch, dass** das Adaptieren ein Trainieren nur eines oder mehrerer Teile des mindestens einen der ein oder mehreren trainierten Modelle (420, 430, 440; 530; 1220) umfasst, und/oder
wobei das Adaptieren ein Trainieren des mindestens einen der ein oder mehreren trainierten Modelle (420, 430, 440; 530; 1220) mittels zweiter Daten umfasst, wobei die zweiten Daten annotiert sind, und wobei die Annotationen einen Soll-Ausgabewert des mindestens einen trainierten Modells angewendet auf die erfassten ersten Daten (510, 520) umfassen, und/oder
die mindestens eine Entscheidung den Arbeitsablauf betreffend bewertet wird, und/oder
wobei das mindestens eine der ein oder mehreren trainierten Modelle (420, 430, 440; 530; 1220) in Abhängigkeit einer negativen und/oder positiven Bewertung adaptiert wird und/oder
eine Vorhersagegenauigkeit des mindestens einen adaptierten trainierten Modells im Vergleich zu einer Vorhersagegenauigkeit des mindestens einen trainierten Modells (420, 430, 440; 530; 1220), angewendet auf die erfassten ersten Daten (510, 520) erhöht ist.

8. Vorrichtung nach einem der Ansprüche 1 bis 7, **gekennzeichnet dadurch, dass** die ein oder mehreren Prozessoren (110) Rechenbeschleuniger, wie Graphical Processing Units, GPUs, TensorFlow Processing Units, TPUs, Application Specific Integrated Circuits, ASICs, oder Field Programmable Gated Arrays, FPGAs, oder mindestens eine Central Processing Unit, CPU, umfassen, und/oder
wobei die Vorrichtung einen Kleinstrechner umfasst.

9. System zur Adaptierung eines Arbeitsablaufes, umfassend:
ein oder mehrere Vorrichtungen (100) nach Anspruch 1, wobei die ein oder mehreren Vorrichtungen (100) Teil der ein oder mehreren Mikroskope und/oder Mikroskopsysteme (210; 330, 350; 500; 1050; 1212, 1214, 1216) sind, und wobei die ein oder mehreren Vorrichtungen ausgestaltet sind zweite Daten an eine Cloud (300; 730; 930; 1240) zu senden;
die Cloud (300; 730; 930; 1240), die eine Rechenressource (860, 870; 930, 980) umfasst, wobei die Rechenressource (860, 870; 930, 980) ausgestaltet ist mindestens eines der ein oder mehreren trainierten Modelle (420, 430, 440; 530; 1220) in Abhängigkeit der zweiten Daten zu adaptieren; und
einen Modell-Manager (1000; 1160), der ausgestaltet ist das mindestens eine adaptierte trainierte Modell auf mindestens einer der ein oder mehreren Vorrichtungen (100) zu implementieren.

10. System nach Anspruch 9, **gekennzeichnet dadurch, dass** das Adaptieren ein Trainieren nur eines Teils des mindestens einen der ein oder mehreren trainierten Modelle mittels der zweiten Daten umfasst, und/oder
die zweiten Daten mindestens eines der folgenden umfassen: das mindestens eine trainierte Modell oder Teile davon; erfasste Daten, die Eingabedaten für das mindestens eine trainierte Modell umfassen; Annotationen über einen Soll-Ausgabewert des mindestens einen trainierten Modells angewendet auf die Eingabedaten; versteckte Repräsentationen von Daten; Bewertungen von Ausgabewerten des mindestens einen trainierten Modells; Parameterdaten mindestens einer der ein oder mehreren Komponenten; Nutzereingaben; Daten zum Ablauf des Experiments; Fehlermeldungen; Informationen zu Reagenzien und Materialien; Gerätedaten von Geräten, die im Verlauf einer durch die ein oder mehreren Mikroskope und/oder Mikroskopsysteme (210; 330, 350; 500; 1050; 1212, 1214, 1216) und/oder durch attachierte Komponenten der ein oder mehreren Mikroskope und/oder Mikroskopsysteme (210; 330, 350; 500; 1050; 1212, 1214, 1216) durchgeführten Messung gesteuert werden; und anwenderbezogene Daten,
wobei die zweiten Daten aus einer oder mehreren Quellen stammen, in der Cloud (300; 730; 930; 1240) aggregiert werden, und/oder automatisch, halbautomatisch oder manuell zu der Cloud (300; 730; 930; 1240) hochgeladen werden, und/oder
das System des Weiteren eine oder mehrere der folgenden Einheiten umfasst: einen Server (740); einen Arbeitsplatzrechner (750); einen Modell-Store (1100) als SoftwareKomponente auf der mindestens einen der ein oder mehreren Vorrichtungen (100), wobei mittels dem Modell-Store (1100) Modelle heruntergeladen und lokal ausgeführt werden können; Komponenten zur Laborautomation; ein oder mehrere Sensoren; ein oder mehrere Aktoren; ein oder mehrere Probenpräparationsgeräte; ein oder mehrere Mikrotome; ein oder mehrere Geräte zum Pipettieren von Flüssigkeiten; und eine Klimakammer, wobei die ein oder mehreren Einheiten über das Netzwerk mit den ein oder mehreren Vorrichtungen (100) verbunden sind.

11. Verfahren (1200) zur Optimierung eines Arbeitsablaufes mindestens eines Mikroskops oder Mikroskopsystems (210; 330, 350; 500; 1050; 1212, 1214, 1216), mit den Schritten:
a) Ausführen (1310) eines Arbeitsablaufes durch ein oder mehrere Komponenten (260, 270) mindestens eines Mikroskops und/oder Mikroskopsystems (210; 330, 350; 500; 1050; 1212, 1214, 1216),
wobei der Arbeitsablauf ein Erfassen von ersten Daten (510, 520) während einer laufenden Messung umfasst, wobei die erfassten ersten Daten (510, 520) Bilddaten umfassen;
b) Anwenden (1330) eines trainierten Modells (420, 430, 440; 530; 1220) zur Bildanalyse auf die erfassten ersten Daten (510, 520); und
c) Treffen (1340) mindestens einer Entscheidung den Arbeitsablauf betreffend basierend auf dem Anwenden des trainierten Modells (420, 430, 440; 530; 1220),
**dadurch gekennzeichnet, dass** die ganze Messung wiederholt wird oder Teile der Messung wiederholt werden, wenn Schwankungen einer Laserleistung, Schwankungen einer Verstärkungsspannung von Sensoren oder Schwankungen einer Temperatur von Klimakammern durch die ein oder mehreren trainierten Modelle (420, 430, 440; 530; 1220) automatisch erkannt werden.

12. Verfahren nach Anspruch 11, **dadurch gekennzeichnet, dass** das Verfahren, vor dem Schritt des Anwendens des trainierten Modells (420, 430, 440; 530; 1220), den Schritt des Bestimmens (1320) des trainierten Modells (420, 430, 440; 530; 1220) zumindest teilweise auf Basis der ersten Daten (510, 520) umfasst.

13. Verfahren nach Anspruch 12, **dadurch gekennzeichnet, dass** das Bestimmen des trainierten Modells (420, 430, 440; 530; 1220) ein Anwenden eines trainierten Mastermodells (400) auf die erfassten ersten Daten (510, 520) umfasst, und/oder
der Schritt des Bestimmens des trainierten Modells (420, 430, 440; 530; 1220) ein Auswählen eines in bestimmter Weise trainierten Modells aus einer Vielzahl von trainierten Modellen (420, 430, 440; 530; 1220) umfasst, wobei 18. Verfahren nach Anspruch 17, **gekennzeichnet dadurch, dass** die Vielzahl von trainierten Modellen durch ein Einsatzgebiet klassifiziert ist, und/oder
die Vielzahl von trainierten Modellen hierarchisch organisiert ist, und/oder
einzelne trainierte Modelle aus der Vielzahl von trainierten Modellen auf einzelne Typen von Proben, Experimenten, Messungen oder Geräteeinstellungen spezialisiert sind.

14. Verfahren nach einem der Ansprüche 11 bis 13, **gekennzeichnet dadurch, dass** das Verfahren des Weiteren den Schritt des Adaptierens des trainierten Modells umfasst, wobei das Adaptieren des trainierten Modells mindestens einen der folgenden Schritte umfasst:
Trainieren eines Teils des trainierten Modells (420, 430, 440; 530; 1220) zumindest teilweise mittels zweiter Daten um ein adaptiertes trainiertes Modell zu erhalten; und
Trainieren des trainierten Modells (420, 430, 440; 530; 1220) mittels aggregierter Daten, wobei die aggregierten Daten aus einer oder mehreren Quellen stammen, um ein adaptiertes trainiertes Modell zu erhalten, wobei die aggregierten Daten automatisch, halbautomatisch oder manuell zu einer Cloud (300; 730; 930; 1240), einem Server (870) oder einem Arbeitsplatzrechner (860) hochgeladene Daten umfassen, und/oder
das trainierte Modell (420, 430, 440; 530; 1220) mittels Deep Learning auf einer Cloud (300; 730; 930; 1240), einem Server (870) oder einem Arbeitsplatzrechner (860) an Daten aus einer oder mehreren Quellen trainiert wurde und auf das mindestens eine Mikroskop oder Mikroskopsystem (210; 330, 350; 500; 1050; 1212, 1214, 1216) und/oder auf attachierte Komponenten des mindestens einen Mikroskops oder Mikroskopsystems (210; 330, 350; 500; 1050; 1212, 1214, 1216) geladen wurde; und/oder
das trainierte Modell (420, 430, 440; 530; 1220) als Web-Service, auf einem Arbeitsplatzrechner, auf dem mindestens einen Mikroskop oder Mikroskopsystem (210; 330, 350; 500; 1050; 1212, 1214, 1216) und/oder auf attachierten Komponenten des mindestens einen Mikroskops oder Mikroskopsystems (210; 330, 350; 500; 1050; 1212, 1214, 1216) angewendet wird.

15. Verfahren nach Anspruch 14, **dadurch gekennzeichnet, dass** das Verfahren des Weiteren den Schritt des Erfassens der zweiten Daten umfasst, wobei die zweiten Daten mindestens eines der folgenden umfassen: das trainierte Modell (420, 430, 440; 530; 1220) oder Teile davon; erfasste Daten, die Eingabedaten für das trainierte Modell (420, 430, 440; 530; 1220) umfassen; Annotationen der Eingabedaten; versteckte Repräsentationen von Daten; Bewertungen von Ausgabewerten des trainierten Modells (420, 430, 440; 530; 1220) angewendet auf die Eingabedaten; Nutzereingaben, wobei der Schritt des Erfassens von zweiten Daten ein Erfassen eines nutzerdefinierten Zustandes, der von einem durch das trainierte Modell (420, 430, 440; 530; 1220) definierten Zustand abweicht, umfasst, wobei die zweiten Daten eine Repräsentation der Abweichung von dem durch das trainierte Modell (420, 430, 440; 530; 1220) definierten Zustand zu dem nutzerdefinierten Zustand oder eine Repräsentation des nutzerdefinierten Zustandes umfassen.

## Claims

1. Device (100) for optimizing workflows of one or more microscopes and/or microscope systems (210; 330, 350; 500; 1050; 1212, 1214, 1216), comprising: one or more processors (110);
one or more computer-readable storage media (120), on which computer-executable instructions are stored which, when executed by the one or more processors (110), cause that
a) one or more components (260, 270) of one or more microscopes and/or microscope systems (210; 330, 350; 500; 1050; 1212, 1214, 1216) perform a workflow,
wherein the workflow comprises capturing first data (510, 520) during an ongoing measurement, wherein the captured first data (510, 520) comprise image data;
b) one or more trained models (420, 430, 440; 530; 1220) for image analysis are applied to the captured first data (510, 520); and
c) at least one decision concerning the workflow is taken based on the applying of the one or more trained models (420, 430, 440; 530; 1220),
**characterized in that**
the entire measurement is repeated or parts of the measurement are repeated if fluctuations of a laser power, fluctuations of an amplification voltage of sensors or fluctuations of a temperature of climate chambers are automatically detected by the one or more trained models (420, 430, 440; 530; 1220).

2. Apparatus as claimed in claim 1, **characterized in that** the computer-executable instructions, when they are executed by the one or more processors (110), further cause the one or more trained models (420, 430, 440; 530; 1220) to be determined at least partially on the basis of the captured first data (510, 520).

3. The device according to claim 2, **characterized in that** the one or more trained models (420, 430, 440; 530; 1220) are determined at least partially based on applying a trained master model (400) to the captured first data (510, 520).

4. The device according to claim 3, **characterized in that** the applying of the trained master model (400) comprises an analysis of the captured first data (510, 520), wherein the trained master model (400) determines the one or more trained models (420, 430, 440; 530; 1220) based on information from the analysis of the captured first data (510, 520).

5. Device according to one of the claims 1 to 4, **characterized in that** the captured first data (510, 520) comprise at least one of the following: user inputs; error messages; metadata; parameter data of the one or more components; data on the course of the experiment; information on reagents and materials; information on an object or a sample; user-related data; and device data of devices which are controlled in the course of a measurement carried out by the one or more microscopes and/or microscope systems (210; 330, 350; 500; 1050; 1212, 1214, 1216) and/or by attached components of the one or more microscopes and/or microscope systems (210; 330, 350; 500; 1050; 1212, 1214, 1216), and/or
a self-diagnosis of the one microscope or the several microscopes and/or of the microscope system (210; 330, 350; 500; 1050; 1212, 1214, 1216) is carried out based on recorded state parameters of modules or components of the one microscope or the several microscopes and/or of the microscope system (210; 330, 350; 500; 1050; 1212, 1214, 1216), and/or
norm ranges in the sense of intervals with threshold values are defined for all device parameters captured sensorily or logically, and when the interval is left the microscope or the several microscopes and/or the microscope system (210; 330; 350; 500; 1050; 1212,1214,1216) can automatically trigger an event, or a trained model searches unsupervised for anomalies in data streams and, when anomalies occur, triggers corresponding events, wherein the events are sent via a network to control software of other microscopes, to the user interface of a user, or to a mobile device of a service technician.

6. Device according to one of the claims 1 to 5, **characterized in that** the device is configured to adapt at least one of the one or more trained models (420, 430, 440; 530; 1220).

7. The device according to claim 6, **characterized in that** the adaptation comprises training only one or more parts of the at least one of the one or more trained models (420, 430, 440; 530; 1220), and/or
wherein the adaptation comprises training the at least one of the one or more trained models (420, 430, 440; 530; 1220) by means of second data, wherein the second data are annotated, and wherein the annotations comprise a target output value of the at least one trained model applied to the captured first data (510, 520), and/or
the at least one decision concerning the workflow is evaluated, and/or
wherein the at least one of the one or more trained models (420, 430, 440; 530; 1220) is adapted depending on a negative and/or positive evaluation and/or
a prediction accuracy of the at least one adapted trained model is increased in comparison with a prediction accuracy of the at least one trained model (420, 430, 440; 530; 1220), applied to the captured first data (510, 520).

8. Device according to one of the claims 1 to 7, **characterized in that** the one or more processors (110) comprise computing accelerators, such as Graphical Processing Units, GPUs, TensorFlow Processing Units, TPUs, Application Specific Integrated Circuits, ASICs, or Field Programmable Gated Arrays, FPGAs, or at least one Central Processing Unit, CPU, and/or
wherein the device comprises a small computer.

9. System for adaptation of a workflow, comprising:
one or more devices (100) according to claim 1, wherein the one or more devices (100) are part of the one or more microscopes and/or microscope systems (210; 330, 350; 500; 1050; 1212, 1214, 1216), and wherein the one or more devices are configured to send second data to a cloud (300; 730; 930; 1240);
the cloud (300; 730; 930; 1240), which comprises a computing resource (860, 870; 930, 980), wherein the computing resource (860, 870; 930, 980) is configured to adapt at least one of the one or more trained models (420, 430, 440; 530; 1220) depending on the second data; and
a model manager (1000; 1160), which is configured to implement the at least one adapted trained model on at least one of the one or more devices (100).

10. The system according to claim 9, **characterized in that** the adaptation comprises training only one part of the at least one of the one or more trained models by means of the second data, and/or
the second data comprise at least one of the following: the at least one trained model or parts thereof; captured data, which comprise input data for the at least one trained model; annotations concerning a target output value upon applying the at least one trained model to the input data; hidden representations of data; evaluations of output values of the at least one trained model; parameter data of at least one of the one or more components; user inputs; data on the course of the experiment; error messages; information on reagents and materials; device data of devices which are controlled in the course of a measurement carried out by the one or more microscopes and/or microscope systems (210; 330, 350; 500; 1050; 1212, 1214, 1216) and/or by attached components of the one or more microscopes and/or microscope systems (210; 330, 350; 500; 1050; 1212, 1214, 1216); and user-related data,
wherein the second data originate from one or more sources, are aggregated in the cloud (300; 730; 930; 1240), and/or are uploaded automatically, semi-automatically or manually to the cloud (300; 730; 930; 1240), and/or
the system further comprises one or more of the following units: a server (740); a workstation (750); a model store (1100) as a software component on the at least one of the one or more devices (100), wherein by means of the model store (1100) models can be downloaded and executed locally; components for laboratory automation; one or more sensors; one or more actuators; one or more sample preparation devices; one or more microtomes; one or more devices for pipetting liquids; and a climate chamber, wherein the one or more units are connected via the network to the one or more devices (100).

11. Method (1200) for optimizing a workflow of at least one microscope or microscope system (210; 330, 350; 500; 1050; 1212, 1214, 1216), with the steps:
a) performing (1310) a workflow by one or more components (260, 270) of at least one microscope and/or microscope system (210; 330, 350; 500; 1050; 1212, 1214, 1216),
wherein the workflow comprises capturing first data (510, 520) during an ongoing measurement, wherein the captured first data (510, 520) comprise image data;
b) applying (1330) a trained model (420, 430, 440; 530; 1220) for image analysis to the captured first data (510, 520); and
c) taking (1340) at least one decision concerning the workflow based on the applying of the trained model (420, 430, 440; 530; 1220),
**characterized in that**
the entire measurement is repeated or parts of the measurement are repeated,
if fluctuations of a laser power, fluctuations of an amplification voltage of sensors or fluctuations of a temperature of climate chambers are automatically detected by the one or more trained models (420, 430, 440; 530; 1220).

12. Method according to claim 11, **characterized in that** the method, before the step of applying the trained model (420, 430, 440; 530; 1220), comprises the step of determining (1320) the trained model (420, 430, 440; 530; 1220) at least partially on the basis of the first data (510, 520).

13. Method according to claim 12, **characterized in that** the determining of the trained model (420, 430, 440; 530; 1220) comprises applying a trained master model (400) to the captured first data (510, 520), and/or
the step of determining the trained model (420, 430, 440; 530; 1220) comprises selecting a trained model trained in a particular manner from a plurality of trained models (420, 430, 440; 530; 1220), wherein 18. Method according to claim 17, **characterised in that** the plurality of trained models is classified by a field of use, and/or
the plurality of trained models is organized hierarchically, and/or individual trained models from the plurality of trained models are specialized to individual types of samples, experiments, measurements or device settings.

14. Method according to one of the claims 11 to 13, **characterized in that** the method further comprises the step of adapting the trained model, wherein the adaptation of the trained model comprises at least one of the following steps:
training a part of the trained model (420, 430,440; 530; 1220) at least partially by means of second data in order to obtain an adapted trained model; and
training the trained model (420, 430, 440; 530; 1220) by means of aggregated data, wherein the aggregated data originate from one or more sources, in order to obtain an adapted trained model, wherein the aggregated data comprise data uploaded automatically, semi-automatically or manually to a cloud (300; 730; 930; 1240), a server (870) or a workstation (860), and/or
the trained model (420, 430, 440; 530; 1220) was trained by means of deep learning on a cloud (300; 730; 930; 1240), a server (870) or a workstation (860) on data from one or more sources and was loaded onto the at least one microscope or microscope system (210; 330, 350; 500; 1050; 1212, 1214, 1216) and/or onto attached components of the at least one microscope or microscope system (210; 330, 350; 500; 1050; 1212, 1214, 1216); and/or
the trained model (420, 430, 440; 530; 1220) is applied as a web service, on a workstation, on the at least one microscope or microscope system (210; 330, 350; 500; 1050; 1212, 1214, 1216) and/or on attached components of the at least one microscope or microscope system (210; 330, 350; 500; 1050; 1212, 1214, 1216).

15. Method according to claim 14, **characterized in that** the method further comprises the step of capturing the second data, wherein the second data comprise at least one of the following: the trained model (420, 430, 440; 530; 1220) or parts thereof; captured data, which comprise input data for the trained model (420, 430, 440; 530; 1220); annotations of the input data; hidden representations of data; evaluations of output values upon applying the trained model (420, 430, 440; 530; 1220) to the input data; user inputs, wherein the step of capturing second data comprises capturing a user-defined state which deviates from a state defined by the trained model (420, 430, 440; 530; 1220), wherein the second data comprise a representation of the deviation from the state defined by the trained model (420, 430, 440; 530; 1220) to the user-defined state or a representation of the user-defined state.

## Revendications

1. Dispositif (100) destiné à l'optimisation de cycles d'opérations d'un ou plusieurs microscopes et/ou systèmes de microscope (210 ; 330, 350 ; 500 ; 1050 ; 1212, 1214, 1216), comprenant : un ou plusieurs processeurs (110) ;
un ou plusieurs supports de stockage lisibles par ordinateur (120), sur lesquels des instructions exécutables par ordinateur sont stockées, lesquelles, lorsqu'elles sont exécutées par le ou les processeurs (110), font en sorte que
a) un ou plusieurs composants (260, 270) d'un ou de plusieurs microscopes et/ou systèmes de microscope (210 ; 330, 350 ; 500 ; 1050 ; 1212, 1214, 1216) exécutent un cycle d'opérations,
dans lequel le cycle d'opérations comprend une capture de premières données (510, 520) pendant une mesure en cours, dans lequel les premières données capturées (510, 520) comprennent des données d'image ;
b) un ou plusieurs modèles entraînés (420, 430, 440; 530; 1220) destinés à l'analyse d'image sont appliqués aux premières données capturées (510, 520) ; et
c) au moins une décision concernant le cycle d'opérations est prise sur la base de l'application du ou des modèles entraînés (420, 430, 440 ; 530 ; 1220),
**caractérisé en ce que**
la mesure entière est répétée ou des parties de la mesure sont répétées lorsque des fluctuations d'une puissance laser, des fluctuations d'une tension de gain de capteurs ou des fluctuations d'une température de chambres climatiques sont détectées automatiquement par le ou les modèles entraînés (420, 430, 440 ; 530 ; 1220).

2. Dispositif selon la revendication 1, **caractérisé en ce que** les instructions exécutables par ordinateur, lorsqu'elles sont exécutées par le ou les processeurs (110), font en outre en sorte que le ou les modèles entraînés (420,430, 440 ; 530 ; 1220) soient déterminés au moins partiellement sur la base des premières données capturées (510, 520).

3. Dispositif selon la revendication 2, **caractérisé en ce que** la détermination du ou des modèles entraînés (420, 430, 440; 530; 1220) est basée au moins partiellement sur l'application d'un modèle maître entraîné (400) aux premières données capturées (510, 520).

4. Dispositif selon la revendication 3, **caractérisé en ce que** l'application du modèle maître entraîné (400) comprend une analyse des premières données capturées (510, 520), dans lequel le modèle maître entraîné (400) détermine, sur la base d'informations issues de l'analyse des premières données capturées (510, 520), le ou les modèles entraînés (420, 430, 440 ; 530 ; 1220).

5. Dispositif selon l'une quelconque des revendications 1 à 4, **caractérisé en ce que** les premières données capturées (510, 520) comprennent au moins l'un des éléments suivants : entrées d'utilisateur ; messages d'erreur ; métadonnées ; données de paramètre du ou des composants ; données relatives au déroulement de l'expérience ; informations relatives à des réactifs et à des matériaux ; informations relatives à un objet ou à un échantillon ; données relatives à l'utilisateur ; et données d'appareil d'appareils commandés au cours d'une mesure effectuée par le ou les microscopes et/ou systèmes de microscope (210; 330, 350; 500; 1050; 1212, 1214, 1216) et/ou par des composants rattachés du ou des microscopes et/ou systèmes de microscope (210; 330, 350; 500; 1050; 1212, 1214, 1216), et/ou
un autodiagnostic du microscope unique ou des plusieurs microscopes et/ou du système de microscope (210; 330, 350; 500; 1050; 1212, 1214, 1216) est effectué sur la base de paramètres d'état enregistrés de modules ou de composants du microscope unique ou des plusieurs microscopes et/ou du système de microscope (210; 330, 350; 500; 1050; 1212, 1214, 1216), et/ou
pour tous les paramètres d'appareil détectés sensoriellement ou logiquement, des plages normales au sens d'intervalles avec des valeurs seuils sont définies, et lors d'une sortie de l'intervalle, le microscope ou les plusieurs microscopes et/ou le système de microscope (210 ; 330, 350 ; 500 ; 1050 ; 1212,1214,1216) peut déclencher de manière autonome un événement, ou un modèle entraîné recherche de manière non supervisée des anomalies dans des flux de données et déclenche, lors de l'apparition d'anomalies, des événements correspondants, où les événements sont envoyés via un réseau à un logiciel de commande d'autres microscopes, à l'interface utilisateur d'un utilisateur, ou sur un appareil mobile d'un technicien de service.

6. Dispositif selon l'une quelconque des revendications 1 à 5, **caractérisé en ce que** le dispositif est configuré pour adapter au moins un des modèles entraînés (420, 430, 440; 530; 1220).

7. Dispositif selon la revendication 6, **caractérisé en ce que** le fait d'adapter comprend un entraînement d'une seule ou de plusieurs parties d'au moins un des modèles entraînés (420, 430, 440 ; 530 ; 1220), et/ou
dans lequel le fait d'adapter comprend un entraînement d'au moins un des modèles entraînés (420, 430, 440 ; 530 ; 1220) au moyen de secondes données, dans lequel les secondes données sont annotées, et dans lequel les annotations comprennent une valeur de sortie cible d'au moins un modèle entraîné appliqué aux premières données capturées (510, 520), et/ou
au moins une décision concernant le cycle d'opérations est évaluée, et/ou
dans lequel au moins un des modèles entraînés (420, 430, 440; 530; 1220) est adapté en fonction d'une évaluation négative et/ou positive et/ou
une précision de prédiction d'au moins un modèle entraîné adapté est augmentée par comparaison avec une précision de prédiction d'au moins un modèle entraîné (420, 430, 440; 530; 1220), appliqué aux premières données capturées (510, 520).

8. Dispositif selon l'une quelconque des revendications 1 à 7, **caractérisé en ce que** le ou les processeurs (110) comprennent des accélérateurs de calcul, tels que des unités de traitement graphique, des GPUs, des unités de traitement TensorFlow, des TPUs, des circuits intégrés spécifiques à une application, des ASICs, ou des réseaux de portes programmables sur site, des FPGAs, ou au moins une unité centrale de traitement, CPU, et/ou
dans lequel le dispositif comprend un microcalculateur.

9. Système destiné à l'adaptation d'un cycle d'opérations, comprenant :
un ou plusieurs dispositifs (100) selon la revendication 1, dans lequel le ou les dispositifs (100) font partie du ou des microscopes et/ou systèmes de microscope (210; 330, 350; 500; 1050; 1212, 1214, 1216), et dans lequel le ou les dispositifs sont configurés pour envoyer des secondes données à un cloud (300; 730; 930; 1240) ;
le cloud (300; 730; 930; 1240), qui comprend une ressource de calcul (860, 870; 930, 980), dans lequel la ressource de calcul (860, 870; 930, 980) est configurée pour adapter au moins un des modèles entraînés (420, 430, 440; 530; 1220) en fonction des secondes données ; et
un gestionnaire de modèles (1000; 1160), qui est configuré pour implémenter l'au moins un modèle entraîné adapté sur au moins un des dispositifs (100).

10. Système selon la revendication 9, **caractérisé en ce que** le fait d'adapter comprend un entraînement d'une seule partie d'au moins un des modèles entraînés au moyen des secondes données, et/ou
les secondes données comprennent au moins l'un des éléments suivants : l'au moins un modèle entraîné ou des parties de celui-ci ; des données capturées, qui comprennent des données d'entrée pour l'au moins un modèle entraîné ; des annotations concernant une valeur de sortie cible de l'au moins un modèle entraîné appliqué aux données d'entrée ; des représentations cachées de données ; des évaluations de valeurs de sortie de l'au moins un modèle entraîné ; des données de paramètre d'au moins un des composants ; des entrées d'utilisateur ; des données relatives au déroulement de l'expérience ; des messages d'erreur ; des informations relatives à des réactifs et à des matériaux ; des données d'appareil d'appareils commandés au cours d'une mesure effectuée par le ou les microscopes et/ou systèmes de microscope (210; 330, 350; 500; 1050; 1212, 1214, 1216) et/ou par des composants rattachés du ou des microscopes et/ou systèmes de microscope (210; 330, 350; 500; 1050; 1212, 1214, 1216) ; et des données relatives à l'utilisateur,
dans lequel les secondes données proviennent d'une ou de plusieurs sources, sont agrégées dans le cloud (300; 730; 930; 1240), et/ou sont éléversées tautomatiquement, semi-automatiquement ou manuellement vers le cloud (300; 730; 930; 1240), et/ou
le système comprend en outre une ou plusieurs des unités suivantes : un serveur (740) ; une station de travail (750) ; un magasin de modèles (1100) en tant que composant logiciel sur au moins un des dispositifs (100), dans lequek des modèles peuvent être téléchargés et exécutés localement au moyen du magasin de modèles (1100) ; des composants d'automatisation de laboratoire ; un ou plusieurs capteurs ; un ou plusieurs actionneurs ; un ou plusieurs dispositifs de préparation d'échantillons ; un ou plusieurs microtomes ; un ou plusieurs dispositifs de pipetage de liquides ; et une chambre climatique, dans lequel la ou les unités sont reliées via le réseau au ou aux dispositifs (100).

11. Procédé (1200) destiné à l'optimisation d'un cycle d'opérations d'au moins un microscope ou système de microscope (210 ; 330, 350 ; 500 ; 1050 ; 1212, 1214, 1216), comportant les étapes suivantes :
a) exécution (1310) d'un cycle d'opérations par un ou plusieurs composants (260, 270) d'au moins un microscope et/ou système de microscope (210 ; 330, 350 ; 500 ; 1050 ; 1212, 1214, 1216),
dans lequel le cycle d'opérations comprend une capture de premières données (510, 520) pendant une mesure en cours, dans lequel les premières données capturées (510, 520) comprennent des données d'image ;
b) application (1330) d'un modèle entraîné (420, 430, 440; 530; 1220) destiné à l'analyse d'image aux premières données capturées (510, 520) ; et
c) prise (1340) d'au moins une décision concernant le cycle d'opérations sur la base de l'application du modèle entraîné (420, 430, 440 ; 530 ; 1220),
**caractérisé en ce que**
la mesure entière est répétée ou des parties de la mesure sont répétées,
lorsque des fluctuations d'une puissance laser, des fluctuations d'une tension de gain de capteurs ou des fluctuations d'une température de chambres climatiques sont détectées automatiquement par le ou les modèles entraînés (420, 430, 440 ; 530 ; 1220).

12. Procédé selon la revendication 11, **caractérisé en ce que** le procédé, avant l'étape d'application du modèle entraîné (420, 430, 440; 530; 1220), comprend l'étape de détermination (1320) du modèle entraîné (420, 430, 440; 530; 1220) au moins partiellement sur la base des premières données (510, 520).

13. Procédé selon la revendication 12, **caractérisé en ce que** la détermination du modèle entraîné (420, 430, 440; 530; 1220) comprend une application d'un modèle maître entraîné (400) aux premières données capturées (510, 520), et/ou
l'étape de détermination du modèle entraîné (420, 430, 440 ; 530 ; 1220) comprend la sélection d'un modèle entraîné d'une manière déterminée parmi une pluralité de modèles entraînés (420, 430, 440 ; 530 ; 1220). dans lequel 18. Procédé selon la revendication 17, **caractérisé en ce que** la pluralité de modèles entraînés est classifiée par un domaine d'utilisation, et/ou
la pluralité de modèles entraînés est organisée hiérarchiquement, et/ou des modèles entraînés individuels de la pluralité de modèles entraînés sont spécialisés sur des types individuels d'échantillons, d'expériences, de mesures ou de réglages d'appareil.

14. Procédé selon l'une quelconque des revendications 11 à 13, **caractérisé en ce que** le procédé comprend en outre l'étape consistant à adapter le modèle entraîné, dans lequel le fait d'adapter le modèle entraîné comprend au moins l'une des étapes suivantes :
entraînement d'une partie du modèle entraîné (420, 430,440; 530; 1220) au moins partiellement au moyen de secondes données afin d'obtenir un modèle entraîné adapté ; et
entraînement du modèle entraîné (420, 430, 440 ; 530 ; 1220) au moyen de données agrégées, dans lequel les données agrégées proviennent d'une ou de plusieurs sources, afin d'obtenir un modèle entraîné adapté, et dans lequel les données agrégées comprennent des données éléversées automatiquement, semi-automatiquement ou manuellement vers un cloud (300 ; 730 ; 930 ; 1240), un serveur (870) ou une station de travail (860), et/ou
le modèle entraîné (420, 430, 440 ; 530 ; 1220) a été entraîné au moyen d'apprentissage profond, sur un cloud (300 ; 730 ; 930 ; 1240), un serveur (870) ou une station de travail (860), sur des données provenant d'une ou de plusieurs sources, et a été chargé sur l'au moins un microscope ou système de microscope (210 ; 330, 350 ; 500 ; 1050 ; 1212, 1214, 1216) et/ou sur des composants rattachés de l'au moins un microscope ou système de microscope (210 ; 330, 350 ; 500 ; 1050 ; 1212, 1214, 1216) ; et/ou
le modèle entraîné (420, 430, 440; 530; 1220) est appliqué en tant que service Web, sur une station de travail, sur l'au moins un microscope ou système de microscope (210; 330, 350; 500; 1050; 1212, 1214, 1216) et/ou sur des composants rattachés de l'au moins un microscope ou système de microscope (210; 330, 350; 500; 1050; 1212, 1214, 1216).

15. Procédé selon la revendication 14, **caractérisé en ce que** le procédé comprend en outre l'étape de capture des secondes données, dans lequel les secondes données comprennent au moins l'un des éléments suivants : le modèle entraîné (420, 430, 440 ; 530 ; 1220) ou des parties de celui-ci ; des données capturées, qui comprennent des données d'entrée pour le modèle entraîné (420, 430, 440 ; 530 ; 1220) ; des annotations des données d'entrée ; des représentations cachées de données ; des évaluations de valeurs de sortie du modèle entraîné (420, 430, 440 ; 530 ; 1220) appliqué aux données d'entrée ; des entrées d'utilisateur, dans lequel l'étape de capture de secondes données comprend une capture d'un état défini par l'utilisateur, qui s'écarte d'un état défini par le modèle entraîné (420, 430, 440 ; 530 ; 1220), et dans lequel les secondes données comprennent une représentation de l'écart entre l'état défini par le modèle entraîné (420, 430, 440 ; 530 ; 1220) et l'état défini par l'utilisateur ou une représentation de l'état défini par l'utilisateur.
